# EUROPEAN PATENT APPLICATION

(11) **EP 4 733 910 A1**
(43) Date of publication of application: **29.04.2026**
(21) Application number: 24910312.8
(22) Date of filing: 05.11.2024
(51) Int. Cl.: G06F 3/0481

(54) **TOUCH METHOD, ELECTRONIC DEVICE AND SYSTEM**

(30) Priority: 27.12.2023 CN 202311837775
(71) Applicant: Huawei Technologies Co., Ltd., Shenzhen, Guangdong 518129 (CN)
(72) Inventor: HU, Zhengyuan, Shenzhen, Guangdong 518129 (CN); ZHAO, Xuewen, Shenzhen, Guangdong 518129 (CN); ZHAI, Weiting, Shenzhen, Guangdong 518129 (CN); XU, Haowei, Shenzhen, Guangdong 518129 (CN); GONG, Nanxue, Shenzhen, Guangdong 518129 (CN)
(74) Representative: Pfenning, Meinig & Partner mbB
(86) International application number: PCT/CN2024/129951
(87) International publication number: WO 2025/139375

(57) **Abstract**

This application provides a touch control method, an electronic device, and a system, and relates to the field of terminal technologies. In this application, a finger location of a user can be detected based on a part of a detection area, to meet an operation requirement of holding with one hand of the user. The method includes: A first electronic device obtains a first finger location on a first edge of a first area of the first electronic device when a user holds the first electronic device, where the first area is a part of a detection area of the first electronic device; and obtains a second finger position on a second edge of the first area of the first electronic device when the user holds the first electronic device, where the first edge of the first area and the second edge of the first area are opposite edges, and the opposite edges are perpendicular to a long side of the detection area. The first finger location corresponds to a first display element that is displayed on a second electronic device and that is located on a first edge of a display area, the second finger location corresponds to a second display element that is displayed on the second electronic device and that is located on a second edge of the display area, and the first edge of the display area and the second edge of the display area are opposite edges.

## Description

This application claims priority to Chinese Patent Application No. 202311837775.X, filed with the China National Intellectual Property Administration on December 27, 2023 and entitled "TOUCH CONTROL METHOD, ELECTRONIC DEVICE, AND SYSTEM", which is incorporated herein by reference in its entirety.

### TECHNICAL FIELD

This application relates to the field of terminal technologies, and in particular, to a touch control method, an electronic device, and a system.

### BACKGROUND

With development of touch control interaction technologies, some long-distance display devices such as a television, a vehicle-mounted screen, and a projector implement a hand-eye separation touch control interaction scenario. For example, after starting an application, the television projects a display interface of the application onto a touch control device. In this way, a user can reversely control the television by performing a touch operation on the touch control device. Compared with a hand-eye synchronization scenario, the hand-eye separation scenario can meet a requirement of the user for remotely controlling the display device.

However, in the foregoing hand-eye separation scenario, the user needs to frequently switch a line of sight between the display device and the touch control device, and cannot implement continuous control. As a result, an interaction controllable range is limited, and interaction efficiency is affected.

### SUMMARY

To resolve the foregoing technical problems, this application provides a touch control method, an electronic device, and a system. According to technical solutions provided in this application, a detection area of a first electronic device includes a first area, and the first area is a part of the detection area. When a finger location of a user is located at each edge of the first area, a second electronic device may correspondingly display a corresponding display element at an edge of a display area of the second electronic device. In this way, when the user holds the first electronic device, the first area of an operation range may also be narrowed down, to meet an operation requirement of holding with one hand of the user, and improve user experience. In addition, with the display element displayed, the user can appropriately perform a reverse control operation without switching a line of sight, so that interaction efficiency is improved.

To achieve the foregoing technical objective, this application provides the following technical solutions.

According to a first aspect, a touch control method is provided, and is applied to a first electronic device. The method includes: obtaining a first finger location when a user holds the first electronic device, where the first finger location is on a first edge of a first area of the first electronic device, the first area is a part of a detection area of the first electronic device, and the first area is used to detect a finger location of the user; and obtaining a second finger location when the user holds the first electronic device, where the second finger location is on a second edge of the first area of the first electronic device, the first edge of the first area and the second edge of the first area are opposite edges of the first area, and the opposite edges of the first area are perpendicular to a long side of the detection area. The first finger location corresponds to a first display element displayed on a second electronic device, and the first display element is located on a first edge of a display area of the second electronic device. The second finger location corresponds to a second display element displayed on the second electronic device, the second display element is located on a second edge of the display area of the second electronic device, and the first edge of the display area and the second edge of the display area are opposite edges of the display area.

In this way, the first electronic device is configured to map an operation to the first area of the entire display area of the second electronic device, to meet a one-hand operation range requirement of the user and reduce operation difficulty of the user. Therefore, a user operation is not affected because a finger of the user cannot touch a part of an area of the first electronic device in some cases.

In addition, with the display element displayed and changed, the user does not need to switch a line of sight between the first electronic device and the second electronic device back and forth, but only needs to keep the line of sight on the second electronic device, to implement a touch control operation. Therefore, in a scenario that requires timely and coherent interaction feedback, like a game, the user may also control the second electronic device at a long distance by using the first electronic device. In this way, a requirement of a long-distance operation of the user is met while large-screen display experience of the user is met.

According to the first aspect, the method further includes: obtaining a third finger location and a fourth finger location of the user, where the third finger location is at a first height from the first electronic device, and the fourth finger location is at a second height from the first electronic device. The third finger location corresponds to a third display element that has a first display effect and that is displayed on the second electronic device, the fourth finger location corresponds to a fourth display element that has a second display effect and that is displayed on the second electronic device, and the first display effect is different from the second display effect.

For example, as a height between a finger of the user and a cover of the first electronic device decreases, a color of the display element is gradually deepened. When the finger of the user touches the cover, a display element with a deepest color is displayed. As the height between the finger of the user and the cover of the first electronic device increases, the color of the display element is gradually weakened. When the height of the finger exceeds a detection distance of the first electronic device, that is, exceeds a detection area range, the first electronic device cannot detect the finger, and display of the display element is stopped.

In this way, the user perceives a relative location relationship between the finger in space and the first electronic device based on a change of a display effect of the display element, and adjusts the finger location in time, to improve interaction efficiency.

According to any one of the first aspect or the implementations of the first aspect, the method further includes: obtaining a fifth finger location in response to movement of a finger of the user from the first finger location to the fifth finger location; and obtaining a sixth finger location in response to movement of the finger of the user from the second finger location to the sixth finger location, where a first projection distance that is between the first finger location and the fifth finger location and that is on the first electronic device is equal to a second projection distance that is between the second finger location and the sixth finger location and that is on the first electronic device. The fifth finger location corresponds to a fifth display element displayed on the second electronic device, the sixth finger location corresponds to a sixth display element displayed on the second electronic device, and a first distance between the first display element and the fifth display element is less than a second distance between the second display element and the sixth display element.

For example, in the first area, a larger distance from a finger root location indicates a larger ratio coefficient used for converting three-dimensional coordinates; and a smaller distance from the finger root location indicates a smaller ratio coefficient used for converting three-dimensional coordinates. In this case, when a finger location near the finger root location and a finger location far away from the finger root location are respectively moved by a same distance, corresponding display element movement distances are different. For example, when a finger location near the finger root location is moved, a movement distance of a mapped display element is small, and when a finger location away from the finger root location is moved, a movement distance of a mapped display element is large.

In this way, it is ensured, by changing the ratio coefficient, that the finger of the user can obtain sensitive interaction experience at a near end or a far end. In this way, even if a size of the first electronic device is large for the user, a problem of an excessively large finger span of the user in a touch control process may be avoided, so that user experience is improved.

According to any one of the first aspect or the implementations of the first aspect, the method further includes: obtaining a seventh finger location of the user. The seventh finger location corresponds to a seventh display element displayed on the second electronic device, and before and after the seventh display element is displayed at a display location corresponding to the seventh finger location, a display effect of an eighth display element originally displayed at the display location changes.

According to any one of the first aspect or the implementations of the first aspect, a changed display effect of the eighth display element matches the seventh display element.

In this way, interaction experience of the user is improved by changing display of a plurality of display elements.

According to any one of the first aspect or the implementations of the first aspect, the detection area of the first electronic device further includes a second area, the second area is a part of the detection area of the first electronic device, the second area is used to detect a finger location of the user, and the first finger location and the second finger location are right hand finger locations of the user; and the method further includes: obtaining an eighth finger location when the user holds the first electronic device, where the eighth finger location is on a first edge of the second area of the first electronic device; and obtaining a ninth finger location when the user holds the first electronic device, where the ninth finger location is on a second edge of the second area of the first electronic device, the first edge of the second area and the second edge of the second area are opposite edges of the second area, the opposite edges of the second area are perpendicular to the long side of the detection area, the eighth finger location and the ninth finger location are left hand finger locations of the user, and the first edge of the first area and the first edge of the second area are opposite edges of the detection area. The eighth finger location corresponds to a ninth display element displayed on the second electronic device, and the ninth display element is located on the second edge of the display area of the second electronic device. The ninth finger location corresponds to a tenth display element displayed on the second electronic device, and the tenth display element is located at the first edge of the display area of the second electronic device.

In this way, a right hand detectable area and/or a left hand detectable area are/is configured, and both the right hand detectable area and the left hand detectable area can be mapped to the entire display area of the display device, to meet an operation requirement of holding with two hands of the user, and reduce one-hand operation difficulty of the user in this process. Therefore, a user operation is not affected because the finger of the user cannot touch a partial area.

According to any one of the first aspect or the implementations of the first aspect, the method further includes: obtaining a tenth finger location of the user; and sending a plurality of first signals to the tenth finger location by using a signal transmission array, where time at which the plurality of first signals arrive at the tenth finger location is the same or similar.

Optionally, the first signal is ultrasonic, high-frequency light, or the like.

In this way, the first electronic device may provide tactile feedback for the user, to enrich user experience.

According to any one of the first aspect or the implementations of the first aspect, the method further includes: obtaining an eleventh finger location of the user, where the tenth finger location is at a third height from the first electronic device, and the eleventh finger location is at a fourth height from the first electronic device; and sending a plurality of second signals to the eleventh finger location by using the signal transmission array, where time at which the plurality of second signals arrive at the eleventh finger location is the same or similar, and signal strength of the plurality of first signals is different from signal strength of the plurality of second signals.

In this way, a change of a distance is prompted to the user when the tactile feedback continuously increases as the finger of the user gets closer to the cover.

According to any one of the first aspect or the implementations of the first aspect, the method further includes: obtaining a twelfth finger location of the user, where the twelfth finger location is at a fifth height from the first electronic device. The twelfth finger location corresponds to an eleventh display element displayed on the second electronic device, the eleventh display element is displayed above the twelfth display element displayed on the second electronic device, and that the fifth height is 0 indicates that the second electronic device is triggered to execute a response event corresponding to the twelfth display element.

In this way, as the finger of the user moves in space, the second electronic device may execute a change of a corresponding display element, to prompt the user of a task that a current finger may indicate the second electronic device to execute. In addition, in response to a change of a finger height of the user, the second electronic device triggers a corresponding response event, to meet an interaction requirement of the user.

According to any one of the first aspect or the implementations of the first aspect, the finger location of the user includes a location that is relative to the first electronic device and that is generated when the finger of the user performs a floating action or a touch action on the first electronic device.

According to a second aspect, a first electronic device is provided. The first electronic device includes a processor and a memory, the memory is coupled to the processor, the memory is configured to store computer program code, the computer program code includes computer instructions, and when the processor reads the computer instructions from the memory, the first electronic device is enabled to: obtain a first finger location when a user holds the first electronic device, where the first finger location is on a first edge of a first area of the first electronic device, the first area is a part of a detection area of the first electronic device, and the first area is used to detect a finger location of the user; and obtain a second finger location when the user holds the first electronic device, where the second finger location is on a second edge of the first area of the first electronic device, the first edge of the first area and the second edge of the first area are opposite edges of the first area, and the opposite edges of the first area are perpendicular to a long side of the detection area. The first finger location corresponds to a first display element displayed on a second electronic device, and the first display element is located on a first edge of a display area of the second electronic device. The second finger location corresponds to a second display element displayed on the second electronic device, the second display element is located on a second edge of the display area of the second electronic device, and the first edge of the display area and the second edge of the display area are opposite edges of the display area.

According to the second aspect, when the processor reads the computer instructions from the memory, the first electronic device is further enabled to: obtain a third finger location and a fourth finger location of the user, where the third finger location is at a first height from the first electronic device, and the fourth finger location is at a second height from the first electronic device. The third finger location corresponds to a third display element that has a first display effect and that is displayed on the second electronic device, the fourth finger location corresponds to a fourth display element that has a second display effect and that is displayed on the second electronic device, and the first display effect is different from the second display effect.

According to any one of the second aspect or the implementations of the second aspect, when the processor reads the computer instructions from the memory, the first electronic device is further enabled to: obtain a fifth finger location in response to movement of a finger of the user from the first finger location to the fifth finger location; and obtain a sixth finger location in response to movement of the finger of the user from the second finger location to the sixth finger location, where a first projection distance that is between the first finger location and the fifth finger location and that is on the first electronic device is equal to a second projection distance that is between the second finger location and the sixth finger location and that is on the first electronic device. The fifth finger location corresponds to a fifth display element displayed on the second electronic device, the sixth finger location corresponds to a sixth display element displayed on the second electronic device, and a first distance between the first display element and the fifth display element is less than a second distance between the second display element and the sixth display element.

According to any one of the second aspect or the implementations of the second aspect, when the processor reads the computer instructions from the memory, the first electronic device is further enabled to: obtain a seventh finger location of the user. The seventh finger location corresponds to a seventh display element displayed on the second electronic device, and before and after the seventh display element is displayed at a display location corresponding to the seventh finger location, a display effect of an eighth display element originally displayed at the display location changes.

According to any one of the second aspect or the implementations of the second aspect, a changed display effect of the eighth display element matches the seventh display element.

According to any one of the second aspect or the implementations of the second aspect, the detection area of the first electronic device further includes a second area, the second area is a part of the detection area of the first electronic device, the second area is used to detect a finger location of the user, and the first finger location and the second finger location are right hand finger locations of the user. When the processor reads the computer instructions from the memory, the first electronic device is further enabled to: obtain an eighth finger location when the user holds the first electronic device, where the eighth finger location is on a first edge of the second area of the first electronic device; and obtain a ninth finger location when the user holds the first electronic device, where the ninth finger location is on a second edge of the second area of the first electronic device, the first edge of the second area and the second edge of the second area are opposite edges of the second area, the opposite edges of the second area are perpendicular to the long side of the detection area, the eighth finger location and the ninth finger location are left hand finger locations of the user, and the first edge of the first area and the first edge of the second area are opposite edges of the detection area. The eighth finger location corresponds to a ninth display element displayed on the second electronic device, and the ninth display element is located on the second edge of the display area of the second electronic device. The ninth finger location corresponds to a tenth display element displayed on the second electronic device, and the tenth display element is located at the first edge of the display area of the second electronic device.

According to any one of the second aspect or the implementations of the second aspect, when the processor reads the computer instructions from the memory, the first electronic device is further enabled to: obtain a tenth finger location of the user; and send a plurality of first signals to the tenth finger location by using a signal transmission array, where time at which the plurality of first signals arrive at the tenth finger location is the same or similar.

According to any one of the second aspect or the implementations of the second aspect, when the processor reads the computer instructions from the memory, the first electronic device is further enabled to: obtain an eleventh finger location of the user, where the tenth finger location is at a third height from the first electronic device, and the eleventh finger location is at a fourth height from the first electronic device; and send a plurality of second signals to the eleventh finger location by using the signal transmission array, where time at which the plurality of second signals arrive at the eleventh finger location is the same or similar, and signal strength of the plurality of first signals is different from signal strength of the plurality of second signals.

According to any one of the second aspect or the implementations of the second aspect, when the processor reads the computer instruction from the memory, the first electronic device is further enabled to: obtain a twelfth finger location of the user, where the twelfth finger location is at a fifth height from the first electronic device. The twelfth finger location corresponds to an eleventh display element displayed on the second electronic device, the eleventh display element is displayed above the twelfth display element displayed on the second electronic device, and that the fifth height is 0 indicates that the second electronic device is triggered to execute a response event corresponding to the twelfth display element.

According to any one of the second aspect or the implementations of the second aspect, the finger location of the user includes a location that is relative to the first electronic device and that is generated when the finger of the user performs a floating action or a touch action on the first electronic device.

According to a third aspect, a touch control system is provided. The system includes a first electronic device and a second electronic device. The first electronic device is configured to: obtain a first finger location when a user holds the first electronic device, where the first finger location is on a first edge of a first area of the first electronic device, the first area is a part of a detection area of the first electronic device, and the first area is used to detect a finger location of the user; and obtain a second finger location when the user holds the first electronic device, where the second finger location is on a second edge of the first area of the first electronic device, the first edge of the first area and the second edge of the first area are opposite edges of the first area, and the opposite edges of the first area are perpendicular to a long side of the detection area. The second electronic device is configured to: display, in response to detecting the first finger location by the first electronic device, a first display element corresponding to the first finger location, where the first display element is located on a first edge of a display area of the second electronic device; and display, in response to detecting the second finger location by the first electronic device, a second display element corresponding to the second finger location, where the second display element is located on a second edge of the display area of the second electronic device, and the first edge of the display area and the second edge of the display area are opposite edges of the display area.

According to the third aspect, the first electronic device is configured to: obtain a third finger location and a fourth finger location of the user, where the third finger location is at a first height from the first electronic device, and the fourth finger location is at a second height from the first electronic device. The second electronic device is configured to: when the third finger location is at the first height from the first electronic device, display a third display element having a first display effect, and when the fourth finger location is at the second height from the first electronic device, display a fourth display element having a second display effect, where the first display effect is different from the second display effect.

According to any one of the third aspect or the implementations of the first aspect, the first electronic device is configured to: obtain a fifth finger location in response to movement of a finger of the user from the first finger location to the fifth finger location; and obtain a sixth finger location in response to movement of the finger of the user from the second finger location to the sixth finger location, where a first projection distance that is between the first finger location and the fifth finger location and that is on the first electronic device is equal to a second projection distance that is between the second finger location and the sixth finger location and that is on the first electronic device. The second electronic device is configured to: display, in response to detecting the fifth finger location by the first electronic device, a fifth display element corresponding to the fifth finger location; and display, in response to detecting the sixth finger location by the first electronic device, a sixth display element corresponding to the sixth finger location, where a first distance between the first display element and the fifth display element is less than a second distance between the second display element and the sixth display element.

According to any one of the third aspect or the implementations of the first aspect, the first electronic device is configured to: obtain a seventh finger location of the user. The second electronic device is configured to: display, in response to detecting the seventh finger location by the first electronic device, a seventh display element corresponding to the seventh finger location, and change a display effect of an eighth display element originally displayed at a display location of the seventh display element.

According to any one of the third aspect or the implementations of the first aspect, a changed display effect of the eighth display element matches the seventh display element.

According to any one of the third aspect or the implementations of the first aspect, the detection area of the first electronic device further includes a second area, the second area is a part of the detection area of the first electronic device, the second area is used to detect a finger location of the user, and the first finger location and the second finger location are right hand finger locations of the user. The first electronic device is configured to: obtain an eighth finger location when the user holds the first electronic device, where the eighth finger location is on a first edge of the second area of the first electronic device; and obtain a ninth finger location when the user holds the first electronic device, where the ninth finger location is on a second edge of the second area of the first electronic device, the first edge of the second area and the second edge of the second area are opposite edges of the second area, the opposite edges of the second area are perpendicular to the long side of the detection area, the eighth finger location and the ninth finger location are left hand finger locations of the user, and the first edge of the first area and the first edge of the second area are opposite edges of the detection area. The second electronic device is configured to: display, in response to detecting the eighth finger location by the first electronic device, a ninth display element corresponding to the eighth finger location, where the ninth display element is located on the second edge of the display area of the second electronic device; and display, in response to detecting the ninth finger location by the first electronic device, a tenth display element corresponding to the ninth finger location, where the tenth display element is located on the first edge of the display area of the second electronic device.

According to any one of the third aspect or the implementations of the first aspect, the first electronic device is configured to: obtain a tenth finger location of the user; and send a plurality of first signals to the tenth finger location by using a signal transmission array, where time at which the plurality of first signals arrive at the tenth finger location is the same or similar.

According to any one of the third aspect or the implementations of the first aspect, the first electronic device is configured to: obtain an eleventh finger location of the user, where the tenth finger location is at a third height from the first electronic device, and the eleventh finger location is at a fourth height from the first electronic device; and send a plurality of second signals to the eleventh finger location by using the signal transmission array, where time at which the plurality of second signals arrive at the eleventh finger location is the same or similar, and signal strength of the plurality of first signals is different from signal strength of the plurality of second signals.

According to any one of the third aspect or the implementations of the first aspect, the first electronic device is configured to: obtain a twelfth finger location of the user, where the twelfth finger location is at a fifth height from the first electronic device. The second electronic device is configured to: display, in response to detecting the twelfth finger location by the first electronic device, an eleventh display element corresponding to the twelfth finger location, where the eleventh display element is displayed above the twelfth display element displayed on the second electronic device; and when the fifth height is 0, trigger execution of a response event corresponding to the twelfth display element.

According to any one of the third aspect or the implementations of the third aspect, the finger location of the user includes a location that is relative to the first electronic device and that is generated when the finger of the user performs a floating action or a touch action on the first electronic device.

According to a fourth aspect, a touch control method is provided, and is applied to a first electronic device. The method includes: detecting a first finger location corresponding to a finger of a user; and sending the first finger location to a second electronic device, where the first finger location is used by the second electronic device to display a first display element corresponding to a first display effect at the first finger location.

In some examples, when the finger of the user is in a detection area of the first electronic device, the first electronic device can detect the first finger location corresponding to the finger of the user.

In this way, the first electronic device detects a finger location of the user, and displays, on the second electronic device, a display element corresponding to the finger location of the user. In this way, with the display element displayed and changed, the user does not need to switch a line of sight between the first electronic device and the second electronic device back and forth, but only needs to keep the line of sight on the second electronic device, to implement a touch control operation. Therefore, in a scenario that requires timely and coherent interaction feedback, like a game, the user may also control the second electronic device at a long distance by using the first electronic device. In this way, a requirement of a long-distance operation of the user is met while large-screen display experience of the user is met.

According to the fourth aspect, a first signal is sent, by using a signal transmission array, to a spatial location indicated by the first finger location.

According to any one of the fourth aspect or the implementations of the fourth aspect, time at which a plurality of first signals sent by a plurality of signal transmission arrays arrive at the spatial location indicated by the first finger location is the same or similar.

In this way, the first electronic device may provide tactile feedback for the user, to enrich user experience.

According to any one of the fourth aspect or the implementations of the fourth aspect, the method further includes: detecting a second finger location corresponding to the finger of the user; and sending the second finger location to the second electronic device, where the second finger location is used by the second electronic device to display a second display element corresponding to a second display effect at the second finger location.

According to any one of the fourth aspect or the implementations of the fourth aspect, the first display effect of the first display element corresponds to a first height indicated by the first finger location, the second display effect of the second display element corresponds to a second height indicated by the second finger location, the first height is different from the second height, and the first display effect is different from the second display effect.

In this way, based on different heights of finger locations, the second electronic device can represent display elements with different display effects, to help the user understand a height between a current finger location and the first electronic device, so that the user can also control display of the second electronic device without switching a line of sight to the first electronic device.

In some examples, the user may operate the second electronic device with one finger or a plurality of fingers by using the first electronic device, and the second electronic device may display one display element corresponding to one finger or one or more display elements corresponding to a plurality of fingers. In this way, a plurality of use requirements of the user are met.

In some examples, the plurality of fingers may be different fingers of a same user, or may be fingers of different users. In some examples, the user may hold or not hold the first electronic device. When the user holds the first electronic device with one hand, the displayed first display element corresponds to a thumb of a hand holding the first electronic device of the user, and the second display element that can be displayed simultaneously with the first display element corresponds to another finger of a hand not holding the first electronic device of the user. Alternatively, when the user holds the first electronic device with both hands, the first display element and the second display element that can be displayed simultaneously correspond to a thumb of a left hand and a thumb of a right hand of the user respectively.

According to any one of the fourth aspect or the implementations of the fourth aspect, the first display effect of the first display element matches the second display effect of the second display element.

For example, when the user performs a two-finger pinching operation in the detection space of the first electronic device, the second electronic device may display a first display element and a second display element that respectively correspond to two fingers, where the first display effect matches the second display effect, to present different pinching degrees.

In this way, better operation experience is brought to the user by matching display effects of display elements.

According to any one of the fourth aspect or the implementations of the fourth aspect, when the user holds the first electronic device, the detection area of the first electronic device includes a right hand detectable area and/or a left hand detectable area. Optionally, the right hand detectable area and the left hand detectable area may not overlap, and are combined into the detection area of the first electronic device, or the right hand detectable area and the left hand detectable area may partially overlap. When a finger of the right hand of the user is located on a right edge of the right hand detectable area, the second electronic device displays a cursor on a right edge of a display area. When a finger of the right hand of the user is located on a left edge of the right hand detectable area, the second electronic device displays a cursor on a left edge of the display area. When a finger of the left hand of the user is located on a left edge of the left hand detectable area, the second electronic device displays a cursor on a left edge of the display area. When a finger of the left hand of the user is located on a right edge of the left hand detectable area, the second electronic device displays a cursor on a right edge of the display area.

In this way, the right hand detectable area and/or the left hand detectable area are/is configured, and both the right hand detectable area and the left hand detectable area can be mapped to the entire display area of the display device, to meet an operation requirement of holding with two hands of the user, and reduce one-hand operation difficulty of the user in this process. Therefore, a user operation is not affected because the finger of the user cannot touch a partial area.

According to any one of the fourth aspect or the implementations of the fourth aspect, when the user holds the first electronic device, in the right hand detectable area and the left hand detectable area, the finger of the user moves by a first projection distance near a finger root, and the finger of the user moves by a second projection distance away from the finger root. When the first projection distance is equal to the second projection distance, a moving distance corresponding to the first projection distance of the display element displayed in the display area of the second electronic device is less than a moving distance corresponding to the second projection distance.

In this way, it is ensured that the finger of the user can obtain sensitive interaction experience at a near end or a far end. In this way, even if a size of the first electronic device is large for the user, a problem of an excessively large finger span of the user in a touch control process may be avoided, so that user experience is improved.

According to a fifth aspect, a touch control method is provided, and is applied to a second electronic device. The method includes: receiving a first finger location sent by a first electronic device; and displaying a first display element, where a first display effect of the first display element on the second electronic device indicates the first finger location.

In some examples, the second electronic device receives a second finger location sent by the first electronic device; and displays a second display element, where a second display effect of the second display element on the second electronic device indicates the second finger location.

In some examples, the first display effect of the first display element corresponds to a first height indicated by the first finger location, the second display effect of the second display element corresponds to a second height indicated by the second finger location, the first height is different from the second height, and the first display effect is different from the second display effect.

According to the fifth aspect, displaying the second display element includes: displaying the second display element in a process of displaying the first display element; or displaying the second display element after the first display element is displayed.

According to any one of the fifth aspect or the implementations of the fifth aspect, the first display effect of the first display element matches the second display effect of the second display element.

According to any one of the fifth aspect or the implementations of the fifth aspect, first horizontal and vertical coordinates indicated by the first finger location are in an area of a third display element displayed on the second electronic device, and the method further includes: changing a third display effect of the third display element, where a changed third display effect of the third display element matches the first display effect of the first display element.

For example, in a process of displaying a desktop by the second electronic device, the first finger location is received, and it is determined that a to-be-displayed location of the first finger location is located at an upper layer of an application icon on the desktop. In this case, the second electronic device may display, at the upper layer, the first display element corresponding to the first finger location, and display, at a lower layer, an enlarged application icon. In this way, the user is prompted that the application icon can be operated at a current finger location.

In this way, an original display element cooperates with the display element corresponding to the finger location, to further reduce operation difficulty of the user and increase operation interest.

According to any one of the fifth aspect or the implementations of the fifth aspect, displaying the first display element includes: determining a display location of the first display element proportionally based on a ratio between a first size of a display of the second electronic device and a second size of a detection area of the first electronic device, and displaying the first display element at the display location.

In this way, the second electronic device displays, based on a fixed ratio, the display element corresponding to the finger location, to provide more authentic display feedback for the user. For example, in a drawing scenario, as a finger of the user moves in space above the first electronic device, a cursor (or displayed as a paintbrush or the like) can move proportionally on the display of the second electronic device.

According to any one of the fifth aspect or the implementations of the fifth aspect, when the user holds the first electronic device, the detection area of the first electronic device includes a right hand detectable area and/or a left hand detectable area. Optionally, the right hand detectable area and the left hand detectable area may not overlap, and are combined into the detection area of the first electronic device, or the right hand detectable area and the left hand detectable area may partially overlap. When a finger of the right hand of the user is located on a right edge of the right hand detectable area, the second electronic device displays a cursor on a right edge of a display area. When a finger of the right hand of the user is located on a left edge of the right hand detectable area, the second electronic device displays a cursor on a left edge of the display area. When a finger of the left hand of the user is located on a left edge of the left hand detectable area, the second electronic device displays a cursor on a left edge of the display area. When a finger of the left hand of the user is located on a right edge of the left hand detectable area, the second electronic device displays a cursor on a right edge of the display area.

According to any one of the fifth aspect or the implementations of the fifth aspect, when the user holds the first electronic device, in the right hand detectable area and the left hand detectable area, the finger of the user moves by a first projection distance near a finger root, and the finger of the user moves by a second projection distance away from the finger root. When the first projection distance is equal to the second projection distance, a moving distance corresponding to the first projection distance of the display element displayed in the display area of the second electronic device is less than a moving distance corresponding to the second projection distance.

According to any one of the fifth aspect or the implementations of the fifth aspect, when a height indicated by the first finger location is 0, the method further includes: executing a response event corresponding to the first finger location.

According to a sixth aspect, an electronic device is provided. The electronic device has a function of implementing the touch control method according to any one of the first aspect or the possible implementations of the first aspect. The function may be implemented by hardware, or may be implemented by hardware executing corresponding software. The hardware or the software includes one or more modules corresponding to the function.

According to a seventh aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the possible implementations of the first aspect.

According to an eighth aspect, a computer program product is provided. When the computer program product is run on an electronic device, the electronic device is enabled to perform the method according to any one of the first aspect or the possible implementations of the first aspect.

According to a ninth aspect, a circuit system is provided. The circuit system includes a processing circuit, and the processing circuit is configured to perform the method according to any one of the first aspect or the possible implementations of the first aspect.

According to a tenth aspect, a chip system is provided, including at least one processor and at least one interface circuit. The at least one interface circuit is configured to perform a transceiver function, and send instructions to the at least one processor. When the at least one processor executes the instructions, the at least one processor performs the method according to any one of the first aspect or the possible implementations of the first aspect.

For technical effect of the foregoing aspects, refer to each other. Details are not described herein again.

### BRIEF DESCRIPTION OF DRAWINGS

FIG. 1 is a diagram of an operating principle of a mouse according to an embodiment of this application;
FIG. 2 is a diagram of a scenario of controlling a display device remotely according to an embodiment of this application;
FIG. 3 is a diagram of a communication system to which a touch control method is applied according to an embodiment of this application;
FIG. 4 is a diagram of a hardware structure of a first electronic device according to an embodiment of this application;
FIG. 5 is a diagram of module interaction according to an embodiment of this application;
FIG. 6 is a diagram 1 of a touch control scenario according to an embodiment of this application;
FIG. 7 is a diagram 2 of a touch control scenario according to an embodiment of this application;
FIG. 8 is a diagram 3 of a touch control scenario according to an embodiment of this application;
FIG. 9 is a diagram 4 of a touch control scenario according to an embodiment of this application;
FIG. 10 is a diagram 5 of a touch control scenario according to an embodiment of this application;
FIG. 11 is a diagram 6 of a touch control scenario according to an embodiment of this application;
FIG. 12 is a diagram 7 of a touch control scenario according to an embodiment of this application;
FIG. 13 is a diagram of a principle of holding state detection according to an embodiment of this application;
FIG. 14 is a diagram 8 of a touch control scenario according to an embodiment of this application;
FIG. 15 is a diagram 9 of a touch control scenario according to an embodiment of this application;
FIG. 16 is a diagram 10 of a touch control scenario according to an embodiment of this application;
FIG. 17(a) to FIG. 17(d) are a diagram 11 of a touch control scenario according to an embodiment of this application;
FIG. 18 is a diagram of an operating principle of a floating detection module according to an embodiment of this application;
FIG. 19 is a diagram 12 of a touch control scenario according to an embodiment of this application;
FIG. 20 is a diagram 13 of a touch control scenario according to an embodiment of this application;
FIG. 21 is a diagram 14 of a touch control scenario according to an embodiment of this application;
FIG. 22 is a diagram 15 of a touch control scenario according to an embodiment of this application;
FIG. 23 is a diagram of an operating principle of a tactile feedback module according to an embodiment of this application;
FIG. 24 is a diagram of a use mode switching scenario according to an embodiment of this application;
FIG. 25 is a schematic flowchart of a touch control method according to an embodiment of this application;
FIG. 26 is a diagram of a structure of a first electronic device according to an embodiment of this application; and
FIG. 27 is a diagram of a structure of a second electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more.

Reference to "an embodiment", "some embodiments", or the like described in the specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized. The term "connection" includes a direct connection and an indirect connection, unless otherwise indicated. "First" and "second" are merely intended for a purpose of description, and shall not be understood as an indication or implication of relative importance or implicit indication of the number of indicated technical features.

In embodiments of this application, the term "example" or "for example" is used to represent giving an example, an illustration, or a description. Any embodiment or design scheme described as "example" or "for example" in embodiments of this application should not be construed as being more preferred or having more advantages than another embodiment or design scheme. Exactly, use of the terms such as "example" or "for example" is intended to present a related concept in a specific manner.

In some embodiments, electronic devices such as a mobile phone, a television, a vehicle-mounted screen, and a projector may implement touch control interaction. The touch control scenario includes a hand-eye synchronization scenario and a hand-eye separation scenario. For example, in the hand-eye synchronization scenario, a display device and a touch control device are a same device. For example, a mobile phone displays an application interface, and executes a corresponding task in response to a touch control operation performed by a user in the application interface. For another example, in the hand-eye separation scenario, a display device and a touch control device are different devices. Optionally, the touch control device is, for example, a keyboard and mouse, an air mouse remote control, or a touchscreen device, so that a user can conveniently control the long-distance display device.

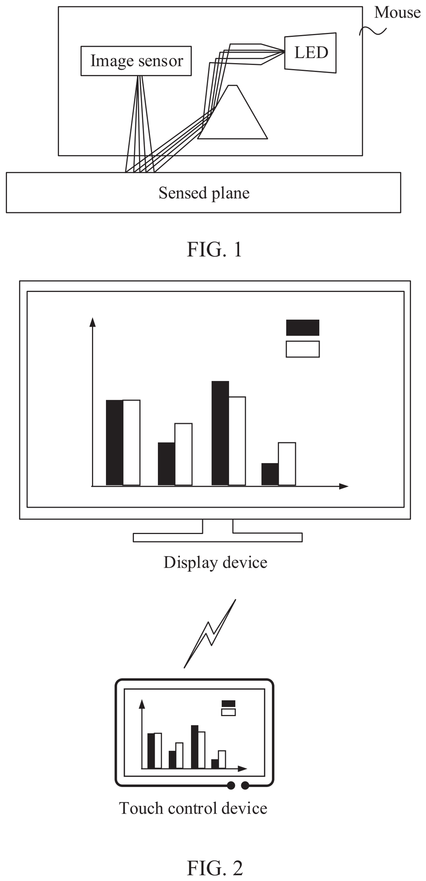

For example, the display device (for example, a computer) is provided with a mouse shown in FIG. 1. In this way, the user can operate displayed content of the display device by using the mouse. The mouse illuminates an external sensed plane by using a light-emitting diode (light-emitting diode, LED), and picks up the external sensed plane by using an image sensor. Then, the mouse obtains relative displacement between two frames of images through comparison by using the image sensor, to determine a movement direction and a movement distance of the mouse. Then, the mouse sends the determined displacement direction and distance to the display device, and the display device moves a cursor based on the displacement direction and distance to execute a corresponding response event.

It can be seen that the mouse needs to be located on a smooth sensed plane to control the display device, and a use environment is limited. In addition, in a case of simultaneous operations, one mouse corresponds to one operation focus (for example, a displayed cursor) on the display device. If multi-finger touch control needs to be implemented, the display device needs to be provided with a plurality of mouse devices, and it is difficult for the user to operate the plurality of mouse devices simultaneously.

For another example, as shown in FIG. 2, a display device projects a displayed application interface onto a touch control device for synchronous display, and then a user may perform a touch operation based on display content on the touch control device. The touch control device sends, to the display device, touch control data generated based on the detected touch operation, and the display device displays corresponding content based on the touch control data. In this way, the user can reversely control the display device by performing a touch operation on the touch control device.

It can be learned that, compared with a hand-eye synchronization scenario, the hand-eye separation scenario can meet a requirement of the user for remotely controlling the display device. However, in the hand-eye separation scenario, when operating the display content, the user needs to switch a line of sight from the display device to the touch control device, and then switch the line of sight from the touch control device to the display device after the operation is completed. In this case, the user needs to frequently switch the line of sight between the display device and the touch control device in an entire touch control process. As a result, continuous control cannot be implemented, and interaction efficiency is affected. In addition, a plurality of data transmissions of display data and touch control data need to be performed between the touch control device and the display device, thereby increasing a touch control delay.

In some scenarios, the display device may obtain an actual size of the touch control device, and determine a ratio coefficient based on a size of a display area of the display device. The touch control device is provided with a floating screen, and the floating screen may be used to detect floating information of a finger of the user corresponding to the floating screen, where the floating information includes coordinates of the finger on the floating screen and a distance between the finger and the floating screen. Then, the touch control device may send the floating information to the display device, and the display device displays an indication icon based on the floating information, so that the user locates a finger operation location.

In the foregoing touch control scenario, the user can determine the finger movement location based on the indication icon, so that switching of the line of sight is reduced. However, the display device displays the indication icon based on the ratio coefficient between the actual size of the touch control device and the size of the display of the display device. In other words, the indication icon is displayed on the display of the display device after a display location is determined proportionally. In some scenarios, a user is accustomed to holding a touch control device to perform an operation like playing a game. In this case, because a finger movement distance is limited, it is difficult for the user to move a finger to a location near a side edge of the touch control device to perform an operation. As a result, it is difficult for the user to operate some content in display content of a display device. In addition, if a size of the display device is large, for example, a large screen device, operation difficulty for the user is further increased, and user experience is affected.

Therefore, embodiments of this application provide a method for controlling a display to display an element by using a finger in a floating manner, and further provides a touch control method on such basis. A detection area of a touch control device is designed to include a first area, and the first area is a part of the detection area. Through a further solution design, when a finger location of a user is at each edge of the first area, a display device may correspondingly display a corresponding display element at an edge of a display area of the display device. In this way, when the user holds the touch control device, the first area of an operation range may also be narrowed down, to meet an operation requirement of holding with one hand of the user, and improve user experience. Further, with the display element displayed, the user can appropriately perform a reverse control operation without switching a line of sight, so that interaction efficiency is improved.

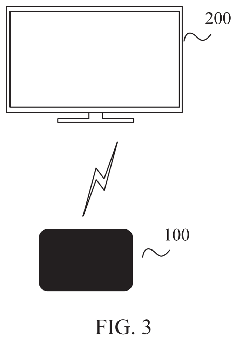

FIG. 3 is a diagram of a communication system to which a touch control method is applied according to an embodiment of this application. As shown in FIG. 3, the communication system includes a first electronic device 100 and a second electronic device 200.

Optionally, the first electronic device 100 may be, for example, a dedicated touch control device, or may be a device having a touch control function. For example, the first electronic device 100 is a touch control device specially configured for the second electronic device 200. Alternatively, the first electronic device 100 may be a terminal device like a mobile phone, a tablet computer, a wearable device, or an AI device. An operating system installed on the first electronic device 100 includes but is not limited to iOS^{®}, Android^{®}, Harmony^{®}, Windows^{®}, Linux^{®}, or another operating system. Alternatively, no operating system may be installed on the first electronic device 100. A specific type of the first electronic device 100, whether an operating system is installed on the first electronic device 100, and an operating system installed on the first electronic device 100 are not limited in this application.

Optionally, the second electronic device 200 may be, for example, a terminal device like a television, a vehicle-mounted screen, a projector, a computer, a tablet computer, a notebook computer, a mobile phone, an ultra-mobile personal computer (ultra-mobile personal computer, UMPC), a netbook, a personal digital assistant (personal digital assistant, PDA), a wearable device, or an artificial intelligence (artificial intelligence, AI) device. An operating system installed on the second electronic device 200 includes but is not limited to iOS^{®}, Android^{®}, Harmony^{®}, Windows^{®}, Linux^{®}, or another operating system. A specific type of the second electronic device 200 and an operating system installed on the second electronic device 200 are not limited in this application.

In some embodiments, a wireless communication connection is established between the first electronic device 100 and the second electronic device 200. A wireless communication technology for establishing a wireless communication connection includes but is not limited to at least one of the following: a wireless local area network (wireless local area network, WLAN)(for example, a wireless fidelity (wireless fidelity, Wi-Fi) network), Bluetooth (Bluetooth, BT) (for example, conventional Bluetooth or Bluetooth low energy (Bluetooth low energy, BLE)), near field wireless communication (near field communication, NFC), Zigbee (Zigbee), frequency modulation (frequency modulation, FM), infrared (infrared, IR), ultra wide band (ultra wide band, UWB), and SparkLink.

Optionally, the first electronic device 100 and the second electronic device 200 may alternatively establish a communication connection by using a third-party device in a local area network. The third-party device is, for example, a router, a gateway, or a server.

In some other embodiments, a wired communication connection is established between the first electronic device 100 and the second electronic device 200. A manner of establishing the wired communication connection is, for example, establishing the wired communication connection through a universal serial bus (universal serial bus, USB) interface connection line.

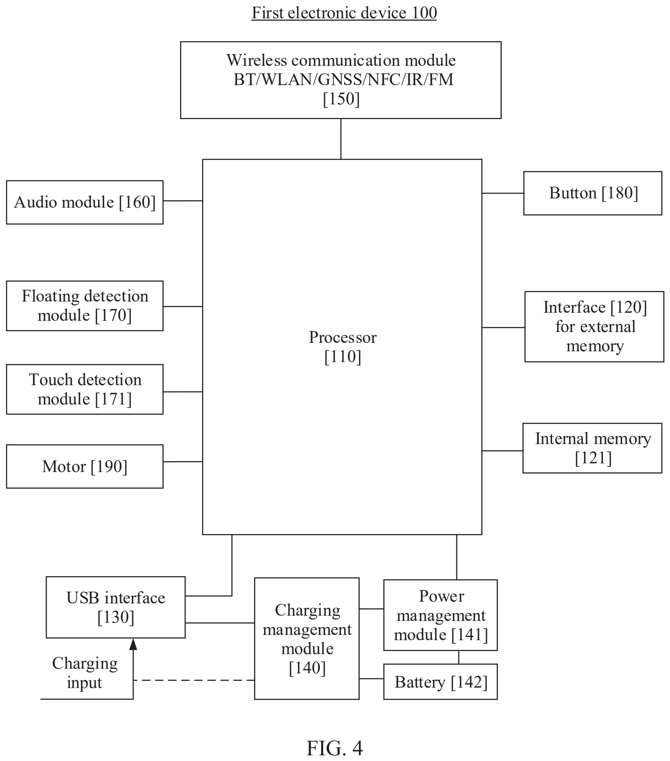

Optionally, FIG. 4 is a diagram of a hardware structure of a first electronic device 100 according to an embodiment of this application. As shown in FIG. 4, the first electronic device 100 may include a processor 110, an interface 120 for external memory, an internal memory 121, a universal serial bus (universal serial bus, USB) interface 130, a charging management module 140, a power management module 141, a battery 142, a wireless communication module 150, an audio module 160, a floating detection module 170, a touch detection module 171, a button 180, a motor 190, and the like.

It may be understood that the structure shown in this embodiment of this application does not constitute a specific limitation on the first electronic device 100. In some other embodiments of this application, the first electronic device 100 may include more or fewer components than those shown in the figure, or a combination of some components, or splits from some components, or a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the first electronic device 100.

The USB interface 130 is an interface that conforms to a USB standard specification, and may be specifically a mini USB interface, a micro USB interface, a USB Type-C interface, or the like. The USB interface 130 may be configured to connect to the charger to charge the first electronic device 100, or may be configured to transmit data between the first electronic device 100 and a peripheral device, or may be configured to connect to a headset for playing audio through the headset. The interface may be further configured to connect to another terminal device, for example, an AR device.

In some embodiments, the first electronic device establishes a wired communication connection to the second electronic device 200 through the USB interface 130. Subsequently, after detecting a finger location of the user, the first electronic device 100 sends the finger location of the user to the second electronic device 200 through the wired communication connection.

It may be understood that an interface connection relationship between the modules illustrated in embodiments of this application is merely an example for description, and does not constitute a limitation on the structure of the first electronic device 100. In some other embodiments of this application, the first electronic device 100 may alternatively use an interface connection manner different from that in the foregoing embodiment, or a group of a plurality of interface connection manners.

A wireless communication function of the first electronic device 100 may be implemented by using the antenna, the wireless communication module 150, the modem processor, the baseband processor, and the like.

The antenna is configured to transmit and receive electromagnetic wave signals. Each antenna in the first electronic device 100 may be configured to cover one or more communication bands. Different antennas may be further reused, to improve antenna utilization. For example, the antenna may be reused as a diversity antenna of a wireless local area network. In some other embodiments, the antenna may be used in combination with a tuning switch.

The wireless communication module 150 may provide a wireless communication solution that is applied to the first electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 150 may be one or more components integrating at least one communication processor module. The wireless communication module 150 receives an electromagnetic wave through an antenna, performs frequency modulation and filtering processing on an electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna.

In some embodiments, the first electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

In some embodiments, the floating detection module 170 and the touch detection module 171 are configured to detect a finger location of a finger of a user in a detection area of the first electronic device 100. Optionally, the detection area is a preset space range located above a cover of the first electronic device 100. The first electronic device 100 is a movable device or a non-movable device. Space above the cover of the first electronic device 100 indicates an orientation corresponding to the cover of the first electronic device 100. In some examples, the orientation corresponding to the cover of the first electronic device 100 is not necessarily the upper part (for example, a sky direction) in a physical sense. In other words, in this embodiment of this application, space above the cover of the first electronic device 100 is space relative to an orientation of the detection area. For example, the user holds the first electronic device 100, and the first electronic device 100 tilts toward a direction of the user, to facilitate a user operation. In this case, space above the detection area of the first electronic device 100 may alternatively be a preset space range that is indicated by the detection area and that is tilted towards the user direction.

In some examples, the floating detection module 170 is configured to detect floating data of the finger of the user, and the touch detection module 171 is configured to detect touch data of the finger of the user. Optionally, the floating data and the touch data are, for example, three-dimensional coordinates of the finger of the user in the detection area. Herein, z in the three-dimensional coordinates corresponding to the touch data is 0. In other words, when the finger of the user touches the cover of the first electronic device 100, a height of the finger location relative to the cover of the first electronic device 100 is 0. In some examples, the floating detection module 170 and the touch detection module 171 may be two independent modules, or may be combined into one module. For other content of the floating detection module 170 and the touch detection module 171, refer to the following related descriptions.

In some examples, the first electronic device 100 establishes a wireless communication connection to the second electronic device 200 by using the wireless communication module 150. After obtaining the finger location of the finger of the user, the first electronic device 100 sends the finger location to the second electronic device 200 by using the wireless communication module 150, so that the second electronic device 200 displays a corresponding display element (for example, a cursor) at a corresponding location on the display based on the finger location.

In some embodiments, the first electronic device 100 is provided with a cover. Optionally, the cover is located on the floating detection module 170 and the touch detection module 171. In some examples, the cover is a part of a housing of the first electronic device 100. In some examples, the cover may further be configured to display an image, a video, or the like. The cover includes a display panel. The display panel may be made of a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light emitting diodes, QLED), or the like.

The interface 120 for external memory may be used to connect to an external memory card, for example, a micro SD card, to extend a storage capability of the first electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) created in a process of using the first electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 performs various function applications of the first electronic device 100 and data processing by running the instructions stored in the internal memory 121 and/or instructions stored in the memory disposed in the processor.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the second electronic device 200. The charging management module 140 supplies power to the electronic device through the power management module 141 while charging the battery 142.

The power management module 141 is configured to connect to the battery 142, the charging management module 140, and the processor 110. The power management module 141 receives inputs from the battery 142 and/or the charging management module 140, and supplies power to the processor 110, the internal memory 121, the floating detection module 170, the touch detection module 171, the wireless communication module 150, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

The audio module 160 is configured to convert digital audio information into an analog audio signal for output, and is also configured to convert analog audio input into a digital audio signal. The audio module 160 may be further configured to encode and decode an audio signal. In some embodiments, the audio module 160 may be disposed in the processor 110, or some functional modules of the audio module 160 are disposed in the processor 110. The first electronic device 100 may perform music playing, recording, or the like through the audio module 160. The audio module 160 may include a speaker, a receiver, a microphone, a headset jack, an application processor, and the like.

The button 180 includes a square control button, a power button, a volume button, and the like. The button 180 may be a mechanical button, or may be a touch button. The first electronic device 100 may receive a button input, and generate a button signal input related to user setting and function control of the first electronic device 100.

In some examples, the first electronic device 100 is provided with an image collection module. The image collection module may be configured to collect a user image, where the user image may be, for example, used to determine a user identity; or may be configured to collect a finger image of a user, where the finger image of the user may be, for example, used to determine a finger location of the user, a manner of holding a device, and the like.

Optionally, the second electronic device 200 has a hardware structure that is the same as, similar to, or different from that shown in FIG. 4. For example, in addition to the hardware shown in FIG. 4, the second electronic device 200 may further include hardware like a display, a camera, and a sensor module.

In some examples, the display may be configured to display an image, a video, or the like. The display includes a display panel. The display panel may be manufactured by using an LCD, for example, an OLED, an active-matrix organic light-emitting diode, an AMOLED, an FLED, a mini-LED, a micro-LED, a micro-OLED, a QLED, or the like.

In some examples, the second electronic device 200 establishes a wireless communication connection to the first electronic device 100 by using the wireless communication module. After receiving the finger location of the user sent by the first electronic device 100, the wireless communication module of the second electronic device 200 sends the finger location to the processor. The processor determines, based on the finger location of the user, a display location and a display effect of a display element (for example, a cursor) corresponding to the finger location. Then, the second electronic device 200 may display, at the determined display location based on the determined display effect, the display element corresponding to the finger location of the user.

In some examples, the second electronic device 200 does not include the floating detection module 170 and the touch detection module 171 shown in FIG. 4. To be specific, the first electronic device 100 detects the finger location of the user by using the floating detection module 170 or the touch detection module 171, and the second electronic device 200 does not need to detect the finger location of the user, but directly receives the finger location that is of the user and that is sent by the first electronic device 100.

In some examples, the display may be a touch screen or a non-touch screen.

The camera is configured to capture a static image or a video. An optical image of an object is generated through a lens, and is projected to a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the second electronic device 200 may include one or N cameras, where N is a positive integer greater than 1.

The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The following describes in detail the touch control method provided in embodiments of this application by using an example in which the first electronic device 100 is a touch control device and the second electronic device 200 is a display device.

In some embodiments, a communication connection is established between the display device and the touch control device. The communication connection is a wired connection or a wireless connection. For example, a wired connection is established between the display device and the touch control device through a USB interface, or a Bluetooth communication connection is established by using a wireless Bluetooth communication technology.

In some examples, the display device and the touch control device are complementary devices. In other words, at least one dedicated touch control device is configured for one display device. Alternatively, in response to a user operation, the touch control device may establish communication connections to different display devices, so that it is convenient for the user to operate different display devices by using the touch control device.

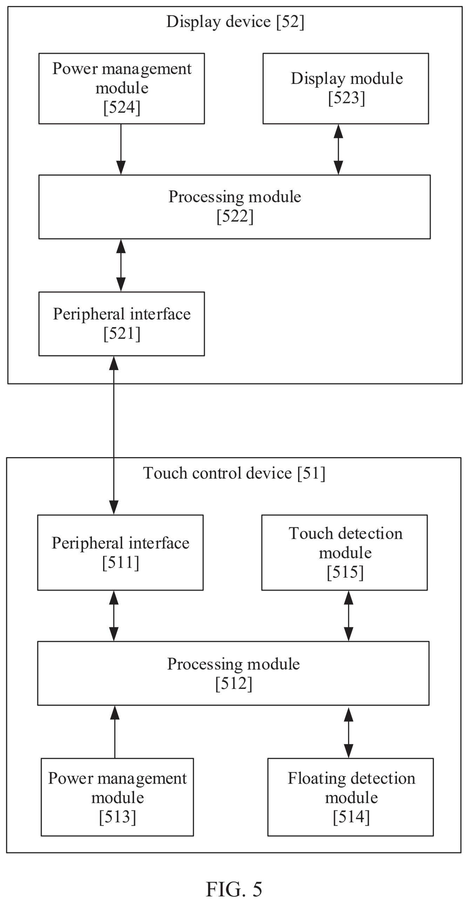

For example, as shown in FIG. 5, a communication connection is established between a peripheral interface 521 of a display device 52 and a peripheral interface 511 of a touch control device 51, to meet a communication requirement between the display device 52 and the touch control device 51. Then, after obtaining user data, a processing module 512 of the touch control device 51 may send the user data to the display device 52 through the peripheral interface 511. Correspondingly, the display device 52 receives, through the peripheral interface 521, the user data sent by the touch control device 51, and processes the user data by using a processing module 522, to display related content by using a display module 523. Optionally, the user data is, for example, a finger location that is of a user and that is detected by the touch control device 51 by using a floating detection module 514 or a touch detection module 515, for example, three-dimensional coordinates of a finger of the user relative to the touch control device 51. The display device 52 may display a corresponding cursor based on the finger location of the user, to help the user determine a location of a current operation. In this way, the user keeps watching the display device 52, and can complete a touch control operation without switching a line of sight, so that continuity of the touch control operation is improved.

It should be understood that the structure shown in FIG. 5 does not constitute a specific limitation on the touch control device 51. In some other embodiments of this application, the touch control device 51 may include more or fewer components than those shown in the figure, or a combination of some components, or splits from some components, or a different component layout. The components shown in the figure may be implemented by using hardware, software, or a combination of software and hardware. For example, the touch control device 51 may further include a power management module 513 configured to supply power to another module. Similarly, the structure shown in FIG. 5 does not constitute a specific limitation on the display device 52. For example, the display device 52 may further include a power management module 524 configured to supply power to another module.

In some embodiments, the touch control device may be configured to detect a finger location of a user in a detection area of the touch control device, for example, three-dimensional coordinates corresponding to a central location of a finger of the user, to meet a requirement of the user for controlling display content of the display device through touching. Optionally, the finger location of the user includes a location that is relative to the touch control device and that is generated when the finger of the user performs a floating action or a touch action on the touch control device.

In some examples, the user controls, by moving a finger in space above the touch control device, the cursor displayed on the display device. In a movement process in which the finger of the user is in a floating state above the touch control device or touches the touch control device, the touch control device detects a change of three-dimensional coordinates of the finger of the user in space above the touch control device, to display, on the display device, a moving cursor corresponding to the three-dimensional coordinates. In this way, the user may learn of a change of a motion status of the current finger, for example, a movement direction, a location, or a height, without switching the line of sight to the touch control device.

Optionally, the display device displays a display element corresponding to the finger location of the user. The display element may be the foregoing cursor, or may be in a plurality of forms such as a game controller, a contour of the finger of the user, and a virtual character. The following uses a cursor as an example to describe the display element displayed on the display device.

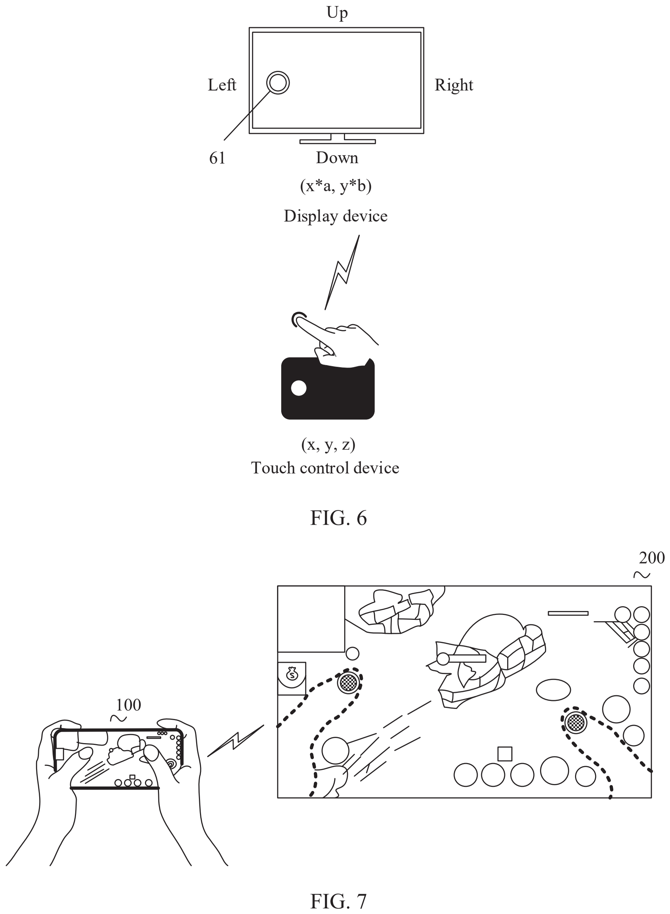

For example, as shown in FIG. 6, a touch control device detects a finger that is of a user and that is located above a cover (which may also be described as a touch control screen, a touch control panel, a touch control area, or the like), and determines three-dimensional coordinates (x, y, z) corresponding to the finger of the user. Then, the touch control device sends the three-dimensional coordinates (x, y, z) to a display device. Correspondingly, the display device receives the three-dimensional coordinates (x, y, z), and displays a cursor 61 at a corresponding location on a display based on the three-dimensional coordinates (x, y, z). If the finger of the user is located at a location near a center of a left edge above the cover of the touch control device, the display device may also display the cursor 61 at a location near a center of a left edge of the display of the display device, to help the user understand a current operation location of the finger, and help the user subsequently continue to move the finger to control a change of display content of the display device.

For "upper", "lower", "left", and "right" described in subsequent embodiments, refer to orientations shown in FIG. 6. Details are not described below again.

In some embodiments, the detection area of the touch control device includes a touch control area located on the cover, and the touch control area is used to detect a touch operation performed by the user on the cover of the touch control device. In other words, the detection area of the touch control device includes space within a preset height range above the touch control area and the touch control area. The display device may obtain size information, such as a length and a width, of the touch control area (for example, the entire cover or some areas on the cover) of the touch control device. In this way, the display device can determine a size ratio coefficient between the touch control area of the touch control device and the display area of the display of the display device. For example, as shown in FIG. 6, a length ratio is a, and a width ratio is b. Subsequently, after obtaining the three-dimensional coordinates sent by the touch control device, the display device can adapt the three-dimensional coordinates to the current display area based on the determined ratio coefficient, for example, the length ratio a and the width ratio b. In this way, the display device can display, based on the ratio coefficient, the cursor that moves with the finger location, to avoid misunderstanding caused to the user because movement of the finger location of the user does not correspond to the display location of the cursor. In addition, by constructing the ratio coefficient, a size of the touch control area of the touch control device does not need to be the same as a size of the display area of the display device, so that a requirement of the user for large-screen display is met while operation difficulty of the user is reduced by simply performing an operation on a small screen.

For example, as shown in FIG. 6, the finger of the user is located in the detection area of the touch control device, and the touch control device may obtain a finger location of the user, and send, to the display device, three-dimensional coordinates corresponding to the finger location of the user. Correspondingly, after receiving the three-dimensional coordinates (x, y, z), the display device obtains coordinates (x*a, y*b) based on x and y indicated in the three-dimensional coordinates, the ratio a, and the ratio b, and displays the cursor 61 at a location with the coordinates (x*a, y*b).

In some embodiments, the touch control device is a fixed device or a handheld mobile device. In some examples, in a process in which the user holds the touch control device, the user may perform a touch control operation by using a hand in a holding state. In this case, when determining that the hand of the user is in the holding state, the touch control device may indicate the display device to display, based on the holding state, the cursor corresponding to the finger location of the user. Optionally, the user may hold the touch control device with one hand, or hold the touch control device with both hands.

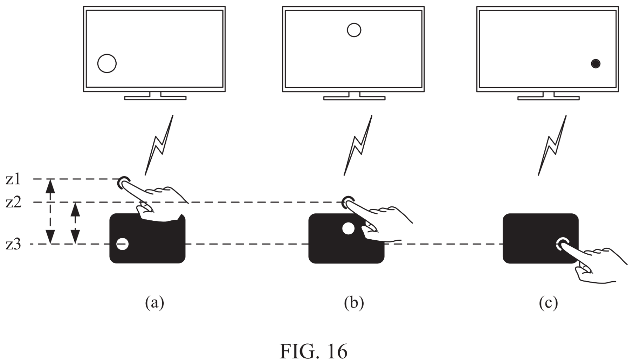

For example, as shown in FIG. 7, a user holds a touch control device 100 with both hands, to perform an operation on a game application displayed on a display device 200. Optionally, the touch control device 100 may synchronously display the game application or not display the game application. Optionally, as shown in FIG. 16, the display device 200 displays cursors corresponding to two thumbs of a left hand and a right hand when the user is in a two-hand holding state. In this way, the user may determine, based on movement of the cursor, a change of a two-hand touch control status in a game process. Optionally, the display device 200 may display contours of the two thumbs of the user and cursors in center areas of the fingers; or the display device 200 may separately display cursors in center areas of the fingers, and does not display contours of the two thumbs.

In this way, through display of the cursor and a display change, the user does not need to switch a line of sight between the display device and the touch control device back and forth, but only needs to keep the line of sight on the display device to implement a touch control operation. Therefore, in a scenario that requires timely and coherent interaction feedback, like a game, the user may also control the display device at a long distance by using the touch control device. In this way, a requirement of a long-distance operation of the user is met while large-screen display experience of the user is met.

In some examples, in a process in which the user holds the touch control device to perform a touch control operation, operation flexibility is limited, for example, a reachable range of a finger is reduced. Therefore, the touch control device may divide the entire detection area of the touch control device, and determine an operable detection area based on a reachable range of a finger when the user holds the touch control device, so that the user can use the touch control device to freely control the display device in a larger range in a holding state.

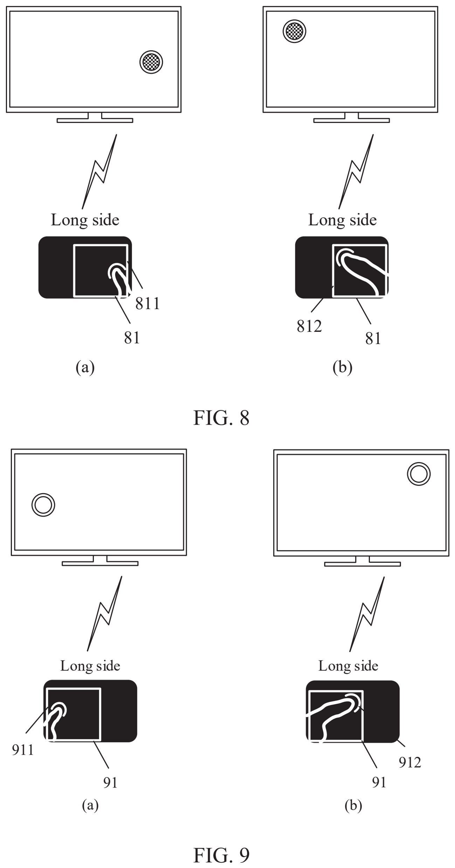

For example, as shown in (a) in FIG. 8, a cover of a touch control device and a display of a display device are rectangular, upper and lower sides are long sides, and left and right sides are short sides. When a user holds the touch control device with a right hand, a thumb of the right hand is located in a detection area of the touch control device, and may be used to control movement of a cursor displayed on the display device. Optionally, the detection area of the touch control device includes a right hand detectable area 81. The right hand detectable area 81 is a part of the detection area of the touch control device, and is used to detect a finger location of the user. In addition, when a finger of the user is at any location in the right hand detectable area 81, the cursor can be displayed at any corresponding location on the display. For example, as shown in (a) in FIG. 8, when the finger of the user is located on a right edge 811 of the right hand detectable area 81, the display device may display, at a corresponding location on a right edge of an entire display area, a cursor corresponding to the finger of the user. For another example, as shown in (b) in FIG. 8, when the finger of the user is located on a left edge 812 of the right hand detectable area 81, the display device may display, at a corresponding location on a left edge of the entire display area, a cursor corresponding to the finger of the user.

Optionally, the right hand detectable area 81 includes a touch control area and space above the touch control area within a reachable range of the thumb of the right hand when the touch control device is held by the right hand of the user. For example, a long side of the touch control area within the reachable area of the right thumb is smaller than the long side of the touch control area of the touch control device, and/or a short side of the touch control area within the reachable range of the right thumb is smaller than the short side of the touch control area of the touch control device. For another example, as shown in (a) in FIG. 9, a cover of a touch control device and a display of a display device are rectangular, upper and lower sides are long sides, and left and right sides are short sides. When a user holds the touch control device with a left hand, a thumb of the left hand is located in a detection area of the touch control device, and may be used to control movement of a cursor displayed on the display device. Optionally, the detection area of the touch control device includes a left hand detectable area 91. The left hand detectable area 91 is a part of the detection area of the touch control device, and is used to detect a finger location of the user. In addition, when a finger of the user is at any location in the left hand detectable area 91, the cursor can be displayed at any corresponding location on the display. For example, as shown in (a) in FIG. 9, when the finger of the user is located on a left edge 911 of the left hand detectable area 91, the display device may display, at a corresponding location on a left edge of the entire display area, a cursor corresponding to the finger of the user. For another example, as shown in (b) in FIG. 9, when the finger of the user is located on a right edge 912 of the left hand detectable area 91, the display device may display, at a corresponding location on a right edge of an entire display area, a cursor corresponding to the finger of the user.

Optionally, the left hand detectable area 91 includes a touch control area and space above the touch control area that are set for the user when the user holds the touch control device with the left hand and that correspond to a reachable range of the thumb of the left hand. For example, a long side of the touch control area that corresponds to the reachable range of the thumb of the left hand is smaller than the long side of the complete touch control area of the touch control device, and/or a short side of the touch control area that corresponds to the range that can be reached by the thumb of the left hand is smaller than the short side of the complete touch control area of the touch control device.

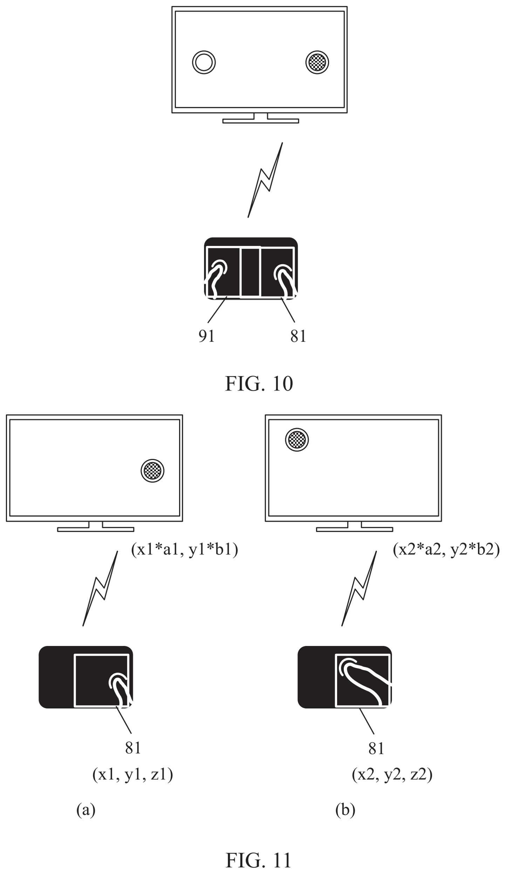

For another example, as shown in FIG. 10, a detection area of a touch control device includes a right hand detectable area 81 and a left hand detectable area 91, to meet a two-hand operation requirement of a user when the user holds the touch control device with two hands. Optionally, there is an overlapping area or no overlapping area between the right hand detectable area 81 and the left hand detectable area 91. For example, the right hand detectable area 81 and the left hand detectable area 91 do not overlap, to form an entire detection area, or the right hand detectable area 81 and the left hand detectable area 91 partially overlap.

In this way, the right hand detectable area and/or the left hand detectable area are/is configured, and both the right hand detectable area and the left hand detectable area can be mapped to an entire display area of a display device, to meet an operation requirement of holding with one hand of the user, and reduce one-hand operation difficulty of the user. Therefore, a user operation is not affected because the finger of the user cannot touch a partial area.

Optionally, a size of right hand operable touch control area or a left hand operable touch control area may be a size preconfigured in the touch control device. After establishing a communication connection to the touch control device, the display device may obtain the size. Alternatively, when detecting that the user uses the touch control device for a first time, or detecting an operation that the user indicates to update the size of the operable touch control area, the touch control device (or the display device) may prompt the user to collect a size of the operable touch control area of the finger when the user holds the touch control device, to obtain the size of the operable touch control area that is more suitable for the current user. Alternatively, the size of the operable touch control area may be automatically determined by the device based on a use habit of the user. Optionally, an area that can be used to detect a one-hand operation when the user holds the touch control device may be continuous in an entire process in which the user uses the touch control device. Alternatively, the size of the operable detection area may be dynamically determined based on a manner in which the user uses the touch control device. For example, when it is determined that the user holds the touch control device, the size of the operable detection area is dynamically adjusted to a size suitable for a one-hand operation when the user holds the touch control device.

In some embodiments, in the scenario shown in FIG. 6, the display device converts, based on the size ratio coefficient of the display area of the display and the size ratio coefficient of the touch control area of the touch control device, the three-dimensional coordinates corresponding to the finger location of the user. In this case, when the user holds the touch control device, the display device may convert the three-dimensional coordinates based on the size ratio coefficient of the display area of the display and the operable detection area of the touch control device.

Optionally, that the user holds the touch control device includes holding the touch control device with one hand (for example, holding the touch control device with a left hand or holding the touch control device with a right hand), or holding the touch control device with two hands. In this case, the touch control device may determine the left hand detectable area and/or the right hand detectable area based on a status of holding the touch control device by the user.

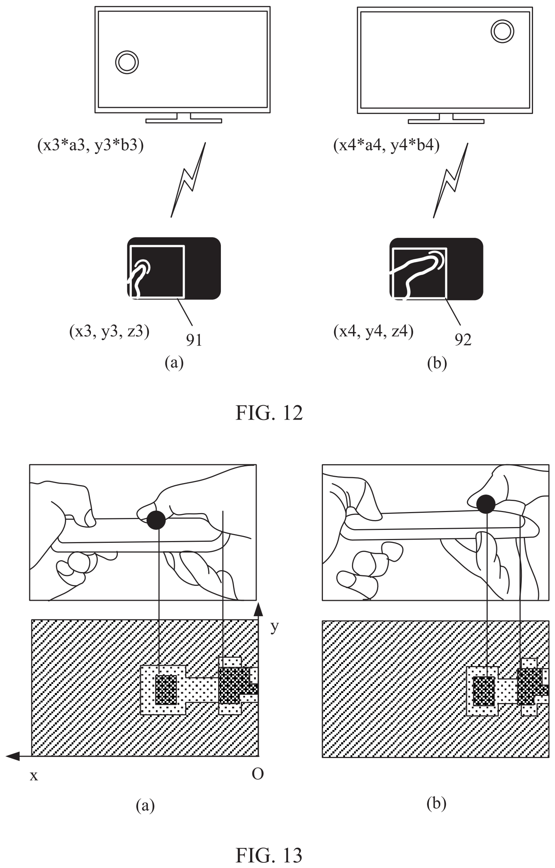

For example, as shown in (a) in FIG. 11, a right hand detectable area 81 is an area within a specific range from a right edge of a detection area of a touch control device to the left. As shown in (a) in FIG. 12, a left hand detectable area 91 is an area within a specific range from a left edge of a detection area of a touch control device to the right.

Optionally, the left hand detectable area and/or the right hand detectable area are/is not necessarily separately mapped to an entire display area of the display device, but are separately corresponding to a specified part of the entire display area of the display device.

In some examples, the display device may convert the obtained three-dimensional coordinates based on a fixed ratio coefficient of the display area of the display device and the operable touch control area of the touch control device.

In some other examples, in a process in which the user holds the touch control device to perform the touch control operation, when a center area of a finger is closer to a finger root, it is more flexible for the user to perform an operation, and operation difficulty is lower. However, when the center area of the finger is farther away from the finger root, it is more difficult for the user to perform an operation, and operation difficulty is higher. Therefore, the display device may set a dynamically changing ratio coefficient, so that when the center area of the finger is closer to the finger root, the ratio coefficient is smaller, or when the center area of the finger is farther from the finger root, the ratio coefficient is larger, and touch control sensitivity is increased.

Optionally, when the user holds the touch control device, the finger root also falls into a three-dimensional detection area of the touch control device. It should be understood that the three-dimensional detection area is an area in which three-dimensional coordinates corresponding to the finger of the user can be detected above the touch control device. For example, as shown in (a) in FIG. 13, the three-dimensional coordinates obtained by the touch control device have a coordinate distribution feature of extending inward from an edge of the detection area. In this case, after obtaining the three-dimensional coordinates, the display device determines, based on the coordinate distribution feature of the three-dimensional coordinates, that the three-dimensional coordinates with a holding feature are obtained, further determines that the hand of the user is currently in the holding state, and may determine whether the hand of the user is in a one-hand holding state (for example, one group of three-dimensional coordinates with a holding feature is detected) or a two-hand holding state (for example, two groups of three-dimensional coordinates with a holding feature are detected).

Optionally, after determining the three-dimensional coordinates corresponding to the finger root when the user holds the touch control device, the display device may determine the ratio coefficient distribution in the detectable area based on an extension area of the location, so that a location closer to the finger root indicates a smaller ratio coefficient, and a location farther away from the finger root indicates a larger ratio coefficient.

For example, as shown in (a) in FIG. 13, the detection area of the touch control device is a rectangle. An intersection point of a long side and a short side in a lower right corner of the detection area is used as an origin of a three-dimensional coordinate system. The long side is in an x-axis direction, and the short side is in a y-axis direction. In this case, if the display device determines that the obtained three-dimensional coordinates include three-dimensional coordinates whose x value is 0 or less than a preset threshold 1, and further include three-dimensional coordinates in which a value of x is greater than a preset threshold 2, it may be determined that the finger root of the user is detected.

In some examples, as shown in (a) and (b) in FIG. 13, in a process in which the user holds the touch control device to perform a touch control operation, the touch control device may detect three-dimensional coordinates corresponding to a center area of a finger of the user. The display device may determine, based on a change of the three-dimensional coordinates, a change of a distance between the center area of the finger of the user and the finger root of the user, to determine the ratio coefficient that needs to be used to convert the three-dimensional coordinates corresponding to the center area of the finger of the user.

For example, as shown in (a) in FIG. 11, when the user holds the touch control device with both hands, and the center area of the finger of the right hand is located at a location on the right edge of the right hand detectable area, the touch control device sends detected three-dimensional coordinates (x1, y1, z1) to the display device. The display device obtains a corresponding ratio coefficient (a1, b1) based on the received three-dimensional coordinates (x1, y1, z1), determines converted coordinates (x1*a1, y1*b1) of the display location of the cursor, and displays the cursor at the coordinate location. Then, as shown in (b) in FIG. 11, when the center area of the finger of the right hand of the user is located at a location in an upper left corner of the right hand detectable area, the touch control device sends detected three-dimensional coordinates (x2, y2, z2) to the display device. The display device obtains a corresponding ratio coefficient (a2, b2) based on the received three-dimensional coordinates (x2, y2, z2), determines converted coordinates (x2*a2, y2*b2) of the display location of the cursor, and displays the cursor at the coordinate location. Herein, a2>a1>a, b2>b1>b, a and b are ratio coefficients of the display area of the display device and the right hand detectable area of the touch control device, or may be ratio coefficients of the display area of the display device and the detection area of the touch control device.

For example, as shown in (a) in FIG. 12, when the user holds the touch control device with both hands, and the center area of the finger of the left hand is located at a location on the left edge of the left hand detectable area, the touch control device sends detected three-dimensional coordinates (x3, y3, z3) to the display device. The display device obtains a corresponding ratio coefficient (a3, b3) based on the received three-dimensional coordinates (x3, y3, z3), determines converted coordinates (x3*a3, y3*b3) of the display location of the cursor, and displays the cursor at the coordinate location. Then, as shown in (b) in FIG. 12, when the center area of the finger of the left hand of the user is located at a location in an upper right corner of the left hand detectable area, the touch control device sends detected three-dimensional coordinates (x4, y4, z4) to the display device. The display device obtains a corresponding ratio coefficient (a4, b4) based on the received three-dimensional coordinates (x4, y4, z4), determines converted coordinates (x4*a4, y4*b4) of the display location of the cursor, and displays the cursor at the coordinate location. Herein, a4>a3>a, b4>b3>b, a and b are ratio coefficients of the display area of the display device and the left hand detectable area of the touch control device, or may be ratio coefficients of the display area of the display device and the detection area of the touch control device.

In some examples, different ratio coefficients of different locations in the detectable area are set, so that a same movement distance of the finger of the user in the detectable area can indicate different movement distances of the cursor displayed on the display device, to compensate for a problem that it is inflexible for the user to perform an operation at a remote location away from the finger root.

For example, as shown in (a) in FIG. 11, the display device displays, in response to detecting a finger location 1 located on the right edge of the right hand detectable area by the touch control device, a display element 1 corresponding to the finger location 1. In response to inward movement of the finger of the user from the finger location 1 to a finger location 2, the finger location 2 is obtained. The display device displays, in response to detecting the finger location 2 by the touch control device, a display element 2 corresponding to the finger location 2. As shown in (b) in FIG. 11, the display device displays, in response to detecting a finger location 3 located on the left edge of the right hand detectable area by the touch control device, a display element 3 corresponding to the finger location 3. In response to inward movement of the finger of the user from the finger location 3 to a finger location 4, the finger location 4 is obtained. The display device displays, in response to detecting the finger location 4 by the touch control device, a display element 4 corresponding to the finger location 4. A projection distance between the finger location 1 and the finger location 2 on the touch control area (cover) of the touch control electronic device is equal to a projection distance between the finger location 3 and the finger location 4 on the touch control area (cover) of the touch control electronic device. A distance between the display element 1 and the display element 2 is less than a distance between the display element 3 and the display element 4. In other words, compared with movement of the finger at a location close to the finger root, movement of the finger at a location far away from the finger root is performed by a same distance, so that the display location of the cursor can be controlled to move by a large distance, and a more flexible operation is implemented.

In this way, it is ensured, by changing the ratio coefficient, that the finger of the user can obtain sensitive interaction experience at a near end or a far end. In this way, even if a size of the touch control device is large for the user, a problem of an excessively large finger span of the user in a touch control process may be avoided, so that user experience is improved.

In some embodiments, as the finger location of the user changes, the touch control device may obtain a plurality of different three-dimensional coordinates. In this case, the touch control device may send the plurality of different three-dimensional coordinates to the display device. In this way, the display device may display the cursor based on the plurality of different three-dimensional coordinates, so that the display location of the cursor is moved on the display as the finger location of the user changes. Therefore, in a hand-eye separation scenario, a long-distance touch control requirement of the user can also be met.

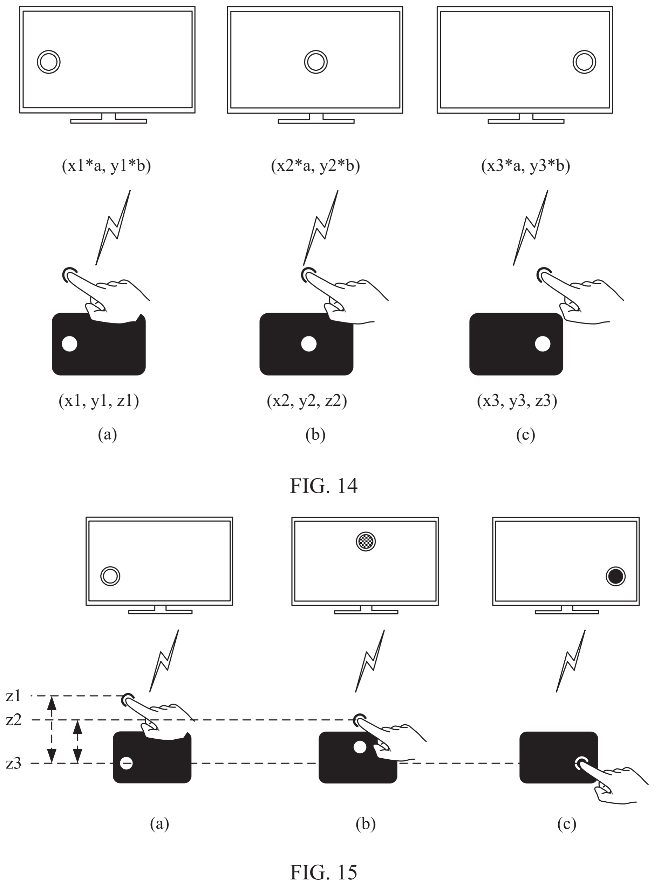

For example, in a scenario shown in FIG. 14, a display device has obtained a ratio coefficient (a, b) between a touch control area of a touch control device and a display area of the display device. As shown in (a) in FIG. 14, after the touch control device sends, to the display device, detected three-dimensional coordinates (x1, y1, z1) corresponding to a finger of a user, the display device displays, based on the three-dimensional coordinates and the ratio coefficient, a cursor at a location with coordinates (x1*a, y1*b) on the display. For example, the cursor is displayed at a left location on the display. Then, as shown in (b) in FIG. 14, the touch control device detects that the finger location of the user changes, and corresponding three-dimensional coordinates change to (x2, y2, z2). After the touch control device sends the changed three-dimensional coordinates to the display device, the display device displays, based on the three-dimensional coordinates and the ratio coefficient, a cursor at a location with coordinates (x2*a, y2*b) on the display. For example, the cursor is displayed in a middle location on the display. Then, as shown in (c) in FIG. 14, the touch control device detects that the finger location of the user changes, and corresponding three-dimensional coordinates change to (x3, y3, z3). After the touch control device sends the changed three-dimensional coordinates to the display device, the display device displays, based on the three-dimensional coordinates and the ratio coefficient, a cursor at a location with coordinates (x3*a, y3*b) on the display. For example, the cursor is displayed in a right location on the display.

Optionally, the touch control device may directly send, to the display device, the detected three-dimensional coordinates corresponding to the finger location of the user, and the display device converts the three-dimensional coordinates, to convert the three-dimensional coordinates into the location of the cursor that is adapted to be displayed in the display area of the display. Alternatively, after detecting the three-dimensional coordinates corresponding to the finger location of the user, the touch control device may first convert the three-dimensional coordinates, and then send converted three-dimensional coordinates to the display device. In this case, after receiving the converted three-dimensional coordinates, the display device may directly display the cursor at a corresponding location on the display.

It should be understood that, in the finger movement scenario shown in FIG. 14, a location at which the display device displays the cursor changes continuously. The display device may display a moving track, or may not display a complete moving track, but display a corresponding cursor only at one or more specified locations, or may not display a moving track at all. (a), (b), and (c) in FIG. 14 are merely diagrams of the cursor location corresponding to the movement location in the movement process of the finger of the user, and do not constitute a limitation on an entire movement process. Details are not described in the following similar movement scenario of the finger in space.

In this way, the touch control device detects a change of three-dimensional coordinates of the finger of the user in space, and displays a corresponding display element (for example, a cursor) on the display device in real time, to help the user understand a current operation, implement remote control of the display device without line-of-sight switching, and improve interaction efficiency.

In addition, in a control process, the display device does not need to send display data to the touch control device, so that an operation delay is reduced by reducing sending of the display data.

In some embodiments, the three-dimensional coordinates detected by the touch control device include a z coordinate, indicating a height from the finger of the user to the cover of the touch control device. In this case, after obtaining the three-dimensional coordinates, the display device may change a display effect of the cursor based on the z coordinate. In this way, the user is notified of the distance between the current finger and the touch control device, so that operation difficulty of the user is effectively reduced.

For example, the display device notifies the user of the height of the finger from the cover of the touch control device based on a change of a color of a cursor. For example, as shown in (a) to (c) in FIG. 15, as the finger of the user moves in the space above the touch control device, the touch control device sends corresponding three-dimensional coordinates to the display device. The display device displays the cursor at different display locations based on a change of the three-dimensional coordinates. In addition, as the height of the finger of the user from the cover of the touch control device decreases, the color of the cursor is gradually deepened. When the finger of the user touches the cover, a cursor with a deepest color is displayed. It should be understood that, when z is equal to 0, it indicates that the finger of the user touches the cover. As the height of the finger of the user from the cover of the touch control device increases, the color of the cursor gradually decreases. When the height of the finger exceeds a detection distance of the touch control device, that is, exceeds a detection area range, the touch control device cannot detect the finger, and stops displaying the cursor.

For another example, the display device notifies the user of the height of the finger from the cover of the touch control device based on a change of a size of a cursor. For example, as shown in (a) to (c) in FIG. 16, as the finger of the user moves in the space above the touch control device, the touch control device sends corresponding three-dimensional coordinates to the display device. The display device displays the cursor at different display locations based on a change of the three-dimensional coordinates. In addition, as the height of the finger of the user from the cover of the touch control device decreases, the size of the cursor gradually decreases. When the finger of the user touches the cover, a cursor with a smallest size is displayed. It should be understood that, when z is equal to 0, it indicates that the finger of the user touches the cover. As the height of the finger of the user from the cover of the touch control device increases, the size of the cursor gradually increases. When the height of the finger exceeds a detection distance of the touch control device, that is, exceeds a detection area range, the touch control device cannot detect the finger, and stops displaying the cursor. Optionally, a size of the cursor is measured by using a size of a display area occupied by the cursor.

Optionally, when determining that z in the three-dimensional coordinates is equal to 0, the display device may display a cursor in a preset display state, to prompt the user that a touch operation is currently triggered.

It should be understood that the display device may also prompt the user with the change of the finger height by changing both the color and the size of the cursor. Alternatively, the display device may prompt the user with the change of the finger height in another manner based on the three-dimensional coordinates. For example, the display device prompts, by using a change of a shape of a cursor, the user with a change of a finger height.

In addition, a display shape of the cursor is not limited in this embodiment of this application. For example, the cursor may be displayed as an arrow, a circle, a square, or another shape (for example, a paintbrush shape or a small person shape) adapted to different application scenarios.

In this way, the user perceives a relative location relationship between the finger in space and the touch control device based on a cursor display change, and adjusts the finger location in time, to improve interaction efficiency.

In some embodiments, as the finger of the user moves in space above the touch control device, one or more display elements on the display device change. For example, a cursor is displayed on the display device, and display of the cursor is changed. For another example, as a display location of the cursor changes, another display element at a corresponding location changes accordingly, to more clearly prompt the user with an operation that can be currently performed.

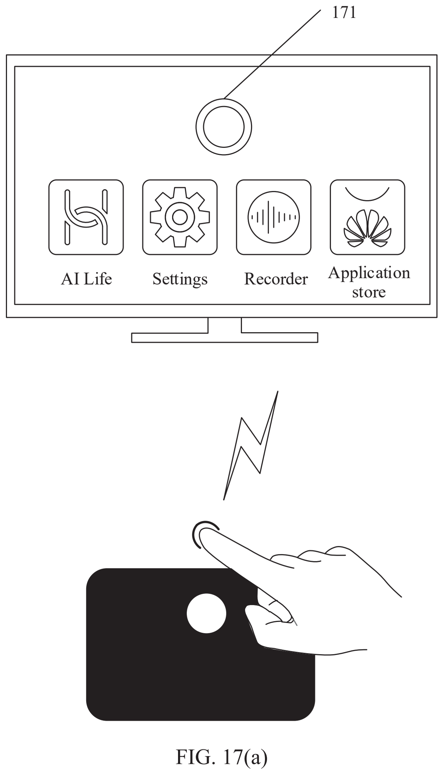

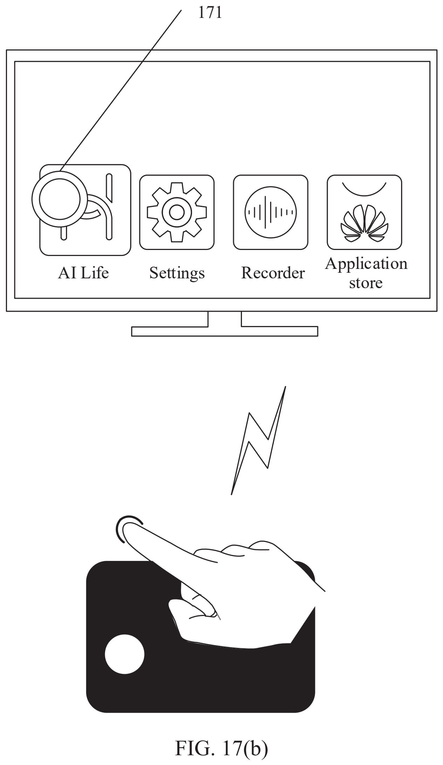

For example, as shown in FIG. 17(a), the touch control device detects three-dimensional coordinates 1 corresponding to the finger of the user, and sends the three-dimensional coordinates 1 to the display device. The display device displays a cursor 171 based on the three-dimensional coordinates 1. Then, as the finger of the user moves, as shown in FIG. 17(b), the touch control device detects three-dimensional coordinates 2 corresponding to the finger of the user, and sends the three-dimensional coordinates 2 to the display device. The display device displays a cursor 171 based on the three-dimensional coordinates 2. In addition, the display device determines that a current display location of the cursor 171 overlaps a display area of an AI Life application icon. For example, the cursor 171 is displayed above the AI Life application icon. In this case, the display device may expand display of an AI Life application icon, to prompt the user that the AI Life application icon can be operated at the current cursor location.

In this way, interaction experience of the user is improved by changing display of a plurality of display elements.

In some embodiments, when z in the three-dimensional coordinates is equal to 0, it indicates that the finger of the user touches the cover. In this case, the display device may determine, based on the touch operation, a task triggered by a user instruction, to execute a corresponding response event.

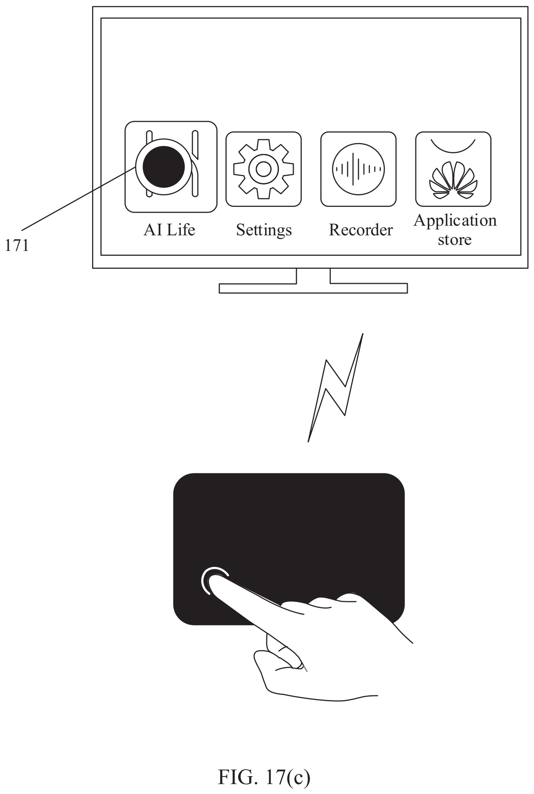

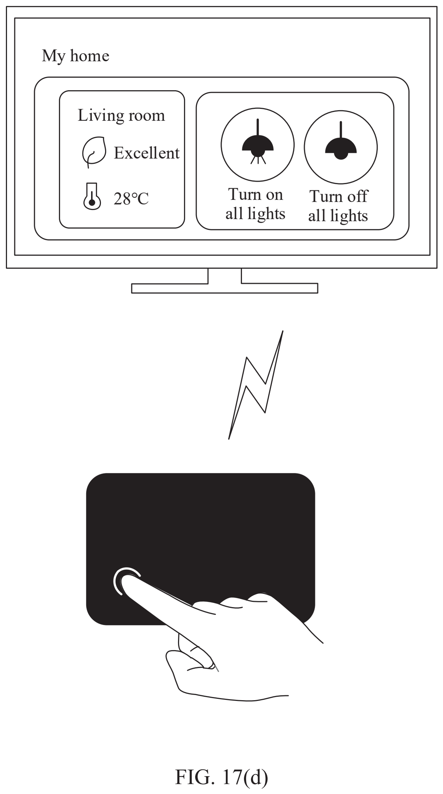

For example, as shown in FIG. 17(b), as the AI Life application icon becomes larger, the user determines that the current cursor 171 can operate the AI Life application icon. In this case, the user may decrease the height of the finger, to trigger an operation on the AI Life application icon. As shown in FIG. 17(c), the touch control device detects three-dimensional coordinates 3 corresponding to the finger of the user, and sends the three-dimensional coordinates 3 to the display device. The display device determines, based on the three-dimensional coordinates 3, that z indicated in the three-dimensional coordinates 3 is equal to 0, and may display a cursor 171 corresponding to a touch state. In addition, the display device may determine that the user indicates to tap the AI Life application icon. In this case, the display device may start an AI Life application, and display an AI Life application interface shown in FIG. 17(d).

In this way, as the finger of the user moves in space, the display device may execute a change of a corresponding display element, to prompt the user of a task that a current finger may indicate the display device to execute. In addition, in response to a change of a finger height of the user, the display device triggers a corresponding response event, to meet an interaction requirement of the user.

In some examples, in the scenario shown in FIG. 17(a) to FIG. 17(d), the touch control device detects a plurality of consecutive three-dimensional coordinates in which values of z are 0, and sends the plurality of consecutive three-dimensional coordinates in which the values of z are 0 to the display device. In this case, the display device may determine, based on the plurality of consecutive three-dimensional coordinates in which the values of z are 0, that the user indicates to perform a touch and hold operation on a display element (for example, an icon) corresponding to the current three-dimensional coordinates. Optionally, the display device may further determine, based on values of x and/or values of y of the plurality of consecutive three-dimensional coordinates in which the values of z are 0, whether to perform a drag operation on a currently selected and held display element. For example, if a change range of the value of x and/or a change range of the value of y exceed/exceeds a preset threshold, the display device may perform a drag operation on the currently selected and held display element.

It should be understood that a tap gesture, a touch and hold gesture, and a drag gesture are used as examples to describe a gesture triggering process in a space touch control scenario. Another gesture operation may also be applicable to the touch control method provided in this embodiment of this application. Examples are not described one by one.

In some embodiments, when the finger of the user is located in space above the touch control device, the touch control device may detect the finger of the user, and determine three-dimensional coordinates corresponding to a center of the finger. For example, the user moves an index finger above the touch control device, to operate display content on the display device. The touch control device may detect the index finger, and send three-dimensional coordinates corresponding to a center of a finger pad of the index finger to the display device, to trigger the display device to change corresponding display content.

It should be understood that the three-dimensional coordinates sent by the touch control device to the display device may be three-dimensional coordinates corresponding to the center of the finger pad of the user, or may be three-dimensional coordinates corresponding to another finger location. For example, the user operates the display content of the display device by moving a side of the finger above the touch control device. After detecting the finger, the touch control device may determine, as the to-be-sent three-dimensional coordinates, three-dimensional coordinates corresponding to a location that is of the finger and that is closest to the cover of the touch control device.

In some examples, as shown in FIG. 5, a floating detection module 514 and a touch detection module 515 are configured in the touch control device 51. The floating detection module 514 is configured to detect corresponding three-dimensional coordinates when the finger is in a floating state and a distance between the finger and the cover of the touch control device 51 is greater than a preset distance. The touch detection module 515 is configured to detect corresponding three-dimensional coordinates when a distance between the finger and the cover of the touch control device 51 is less than or equal to the preset distance (including a case in which the finger touches the cover).

In some examples, the floating detection module 514 and the touch detection module 515 may be two separate modules, or may be one module having a floating detection function and a touch detection function.

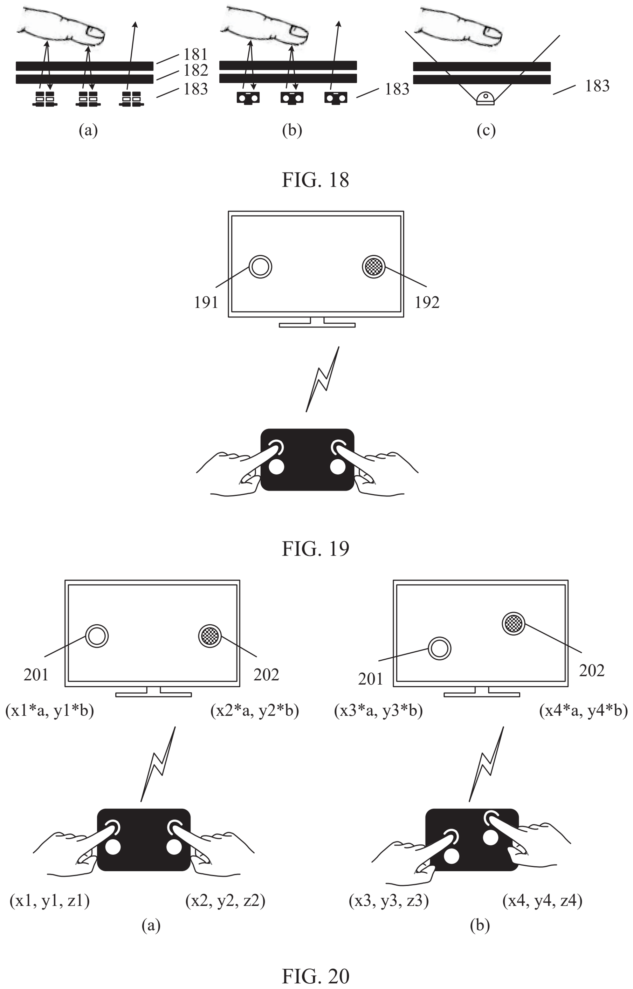

For example, as shown in (a) in FIG. 18, a touch detection module 182 is disposed below a cover 181 of a touch control device, the touch detection module 182 detects, for example, a touch operation of a finger of a user through capacitive touch detection, resistive touch detection, surface acoustic wave touch detection, infrared touch detection, or piezoelectric touch detection. A floating detection module 183 is disposed below the touch detection module 182. The floating detection module 183 detects, by using, for example, a high-sensitivity capacitor array, an invisible light array, an ultrasonic array, or a camera, three-dimensional coordinates corresponding to the finger of the user.

It should be understood that the structure shown in (a) in FIG. 18 does not constitute a specific limitation on the touch control device. For example, the floating detection module may alternatively be located above the touch detection module.

Optionally, as shown in (a) in FIG. 18, the floating detection module 183 is an invisible light emitting or receiving array. The touch control device emits light by using the invisible light emitting array, determines, based on strength and distribution of an optical signal received by the invisible light receiving array, a location with strongest optical signal strength, and determines three-dimensional coordinates of the location. The location is, for example, a center of a finger pad of the finger the user.

Optionally, as shown in (b) in FIG. 18, the floating detection module 183 is an ultrasonic transmitting or receiving array. The touch control device transmits an ultrasonic wave by using the ultrasonic transmitting array, determines, based on strength and distribution of an ultrasonic signal received by the ultrasonic receiving array, a location with strongest ultrasonic signal strength, and determines three-dimensional coordinates of the location. The location is, for example, a center of a finger pad of the finger the user.

Optionally, as shown in (c) in FIG. 18, the floating detection module 183 is a camera, for example, an ultra-wide-angle camera or a fisheye camera. The touch control device captures a picture through short-distance focusing by using the camera, performs image recognition on the picture, and determines three-dimensional coordinates corresponding to a center location of the finger. For example, three-dimensional coordinates corresponding to a center of a finger pad of the finger the user are determined through image recognition. Optionally, when the floating detection module 183 is a camera, a cover of the touch control device is, for example, a transparent cover, so that the floating detection module 183 shoots a picture through the cover.

In this way, the touch control device may flexibly detect, in a plurality of manners, the three-dimensional coordinates corresponding to the finger, to improve accuracy of detecting a finger location of the user, improve touch latency of cursor movement, and improve user experience.

Optionally, in a process in which the touch control device detects, by using the high-sensitivity capacitor array, the invisible light array, the ultrasonic array, the camera, or the like, the three-dimensional coordinates corresponding to the finger of the user, after detecting a capacitance signal, an optical signal, an ultrasonic signal, or an image that meets a feature of a finger root of the user, the touch control device indicate the display device that the finger root of the user is currently detected.

In some embodiments, the touch control device may further detect movement locations of a plurality of fingers located in space above the touch control device, to meet a multi-finger touch control requirement of the user.

For example, as shown in FIG. 19, two fingers of the user are located in space above the touch control device. The touch control device may separately detect three-dimensional coordinates 1 and three-dimensional coordinates 2 corresponding to the two fingers, and send the three-dimensional coordinates 1 and the three-dimensional coordinates 2 to the display device. Correspondingly, the display device displays, based on the received three-dimensional coordinates 1 and three-dimensional coordinates 2, a cursor 191 and a cursor 192 that respectively correspond to the three-dimensional coordinates of the two fingers of the user. A display style of a plurality of cursors simultaneously displayed on the display device presents a corresponding display effect based on a corresponding finger height. For example, a higher finger height indicates a lighter cursor color and a larger cursor size.

In this way, when the user performs a multi-finger operation, the display device may also display changes of a plurality of corresponding display elements, to enrich interaction scenarios.

Optionally, the multi-finger touch control scenario includes a multi-finger touch control scenario in a holding state or a multi-finger touch control scenario in a non-holding state. For example, when the user holds the touch control device with both hands, the display device may also display two cursors respectively corresponding to thumbs of left and right hands of the user.

In some examples, in a multi-finger touch control scenario, different display locations of the cursor correspond to a same ratio coefficient. Optionally, the ratio coefficient is, for example, a size ratio between a display area of the display device and a touch control area of the touch control device.

For example, as shown in (a) in FIG. 20, after detecting that three-dimensional coordinates respectively corresponding to two fingers of a user are (x1, y1, z1) and (x2, y2, z2), a touch control device sends the three-dimensional coordinates to a display device. After obtaining the three-dimensional coordinates, the display device converts the three-dimensional coordinates into cursor display location coordinates (x1*a, y1*b) and (x2*a, y2*b) that are adapted to a display area of a current display based on a ratio coefficient (a, b), and determines a display style of a cursor based on a value of z in the three-dimensional coordinates. For example, as shown in (a) in FIG. 20, the display device displays a cursor 201 and a cursor 202.

Then, after detecting that the two fingers of the user move, and three-dimensional coordinates respectively corresponding to locations after movement are (x3, y3, z3) and (x4, y4, z4), the touch control device sends the three-dimensional coordinates to the display device. After obtaining the three-dimensional coordinates, the display device converts the three-dimensional coordinates into cursor display location coordinates (x3*a, y3*b) and (x4*a, y4*b) that are adapted to a display area of a current display based on a ratio coefficient (a, b), and determines a display style of a cursor based on a value of z in the three-dimensional coordinates. For example, as shown in (b) in FIG. 20, the display device displays the display cursor 201 and the cursor 202 at changed display locations.

In some other examples, in a multi-finger touch control scenario, different cursor display locations in a holding state correspond to different ratio coefficients. The ratio coefficient may be determined based on a left hand detectable area or a right hand detectable area. For a specific implementation, refer to the foregoing related content. Details are not described herein again.

In this way, through cooperation between the touch control device and the display device, a multi-finger touch control requirement of the user is met, and a use scenario of remotely controlling the display device is enriched.

In addition, optionally, in the multi-finger touch control scenario, whether a plurality of fingers are a plurality of fingers of a same user is not limited. For example, a user A and a user B separately perform a touch control operation on a same touch control device by using one finger of each of the user A and the user B, to indicate the display device to display a corresponding cursor movement effect.

It should be understood that, for other content of the multi-finger touch control scenario, refer to related content in the foregoing one-finger touch control scenario. Details are not described herein again. In addition, two fingers are used as an example to describe the multi-finger touch control scenario. Implementation in which the user performs a touch control operation by using more fingers is also applicable to the multi-finger touch control scenario in the foregoing example.

In addition, optionally, in the one-finger or multi-finger touch control scenario, in a non-holding state, the display device converts three-dimensional coordinates based on a fixed ratio coefficient, to provide more authentic display feedback for the user. For example, in a drawing scenario, as a finger of the user moves in space above the touch control device, a cursor (or displayed as a paintbrush or the like) can move proportionally on the display of the display device.

In some embodiments, according to the touch control method provided in this embodiment of this application, in addition to the tap, touch and hold, and drag gesture operations in the foregoing examples, in the multi-finger touch control scenario, a more complex gesture operation like two-finger pinching may be further detected, to meet a requirement of the user for more abundant touch control operations.

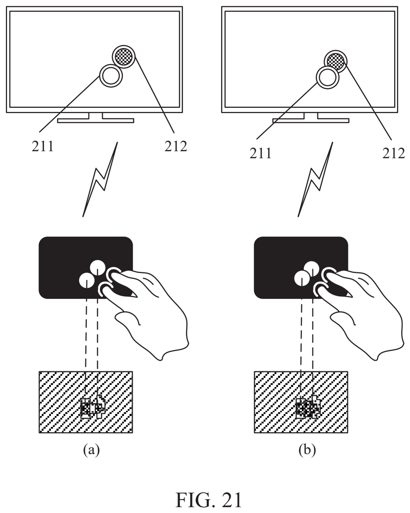

For example, as shown in (a) in FIG. 21, a touch control device detects three-dimensional coordinates 1 and three-dimensional coordinates 2 that respectively correspond to two fingers, and sends the three-dimensional coordinates 1 and the three-dimensional coordinates 2 to a display device. The display device determines, based on the received three-dimensional coordinates 1 and three-dimensional coordinates 2, that a two-finger pinching operation of a user is detected, and may display a cursor 211 and a cursor 212 that are close to each other. For example, distances between values of x, values of y, and values of z that are indicated by the three-dimensional coordinates 1 and the three-dimensional coordinates 2 are less than a threshold 1. Then, as shown in (b) in FIG. 21, the touch control device detects three-dimensional coordinates 3 and three-dimensional coordinates 4 that respectively correspond to the two fingers, and sends the three-dimensional coordinates 3 and the three-dimensional coordinates 4 to the display device. The display device determines, based on the received three-dimensional coordinates 3 and three-dimensional coordinates 4, that a two-finger pinching operation of the user is still detected, and determines that distances between values of x, values of y, and values of z that are indicated by the three-dimensional coordinates 3 and the three-dimensional coordinates 4 are less than a threshold 2. If the threshold 2 is less than the threshold 1, a cursor 211 and a cursor 212 that are closer to each other may be displayed.

In this way, in a two-finger pinching scenario, different cursor display style changes may also be presented based on a distance change between three-dimensional coordinates, to help the user understand a gesture operation meaning. For example, based on a cursor change shown in (a) in FIG. 21 to (b) in FIG. 21, the user may determine that a current finger pinching degree increases. In this way, for example, in some scenarios like a game, the display device may further enrich touch control experience of the user by changing a display style of another display element (for example, an elastic ball).

In some embodiments, the touch control area of the touch control device cannot be displayed, or can be displayed.

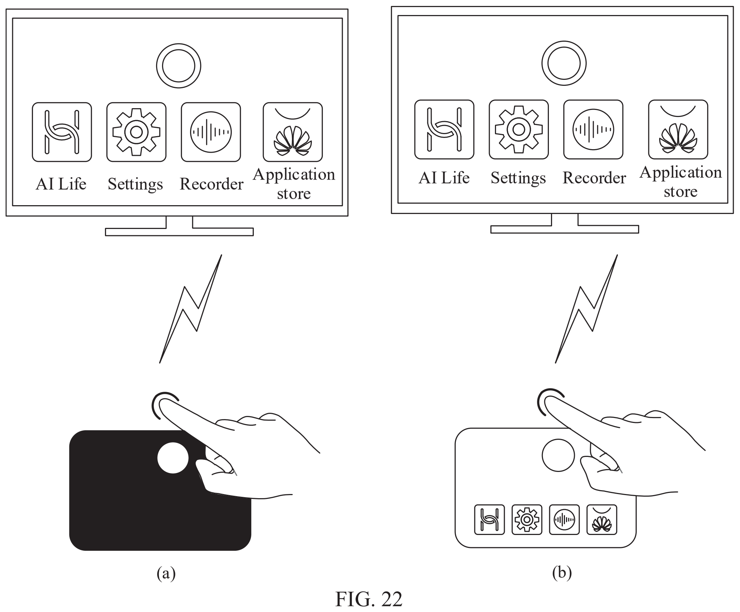

For example, as shown in (a) in FIG. 22, a touch control device does not have a display function. The touch control device is configured to send, to a display device, detected three-dimensional coordinates corresponding to a finger, and the display device performs display. In this way, a process of transmitting display content between the touch control device and the display device is reduced, and an operation delay is reduced.

For another example, as shown in (b) in FIG. 22, a touch control device has a display function, and the touch control device receives display content reversely transmitted by a display device and displays the display content. In a process of detecting three-dimensional coordinates corresponding to a finger of a user, the touch control device may also synchronously display the display content displayed on the connected display device. In this way, a requirement of the user for directly viewing the display content on the touch control device is met.

Optionally, whether the touch control device displays or does not display the content may be set by the user.

In some embodiments, the touch control device may provide tactile feedback for the user, to enrich user experience.

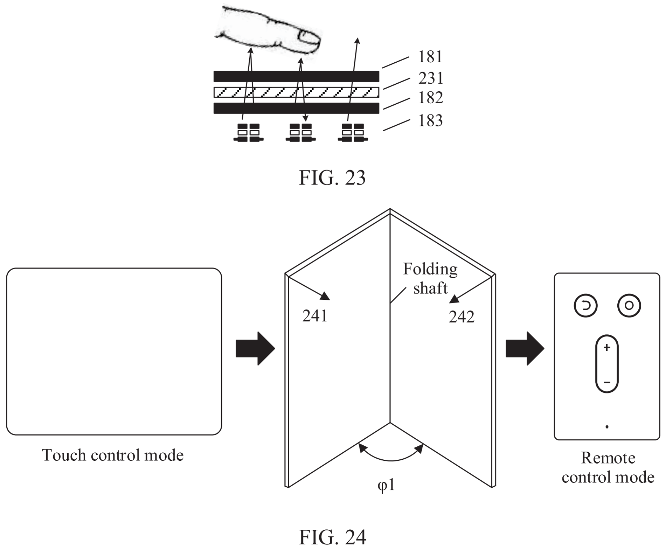

For example, as shown in (a) in FIG. 18, the touch control device includes the cover 181, the touch detection module 182, and the floating detection module 183 that are sequentially disposed from top to bottom. In this case, as shown in FIG. 23, to provide tactile feedback for the user, a tactile feedback module 231 may be disposed under the cover 181.

Optionally, the tactile feedback module 231 is, for example, a 3D tactile array like an ultrasonic array or a high-frequency light array.

For example, the tactile feedback module 231 is an ultrasonic array. After detecting the three-dimensional coordinates corresponding to the finger of the user, the touch control device may control different ultrasonic signal transmitters included in the tactile feedback module 231 to send ultrasonic signals, so that ultrasonic signals sent by all the ultrasonic signal transmitters arrive at a center area (for example, a center area of a finger pad of the finger) of the finger simultaneously. In this way, the user can obtain the tactile feedback. Then, when determining that the three-dimensional coordinates corresponding to the finger of the user change, the touch control device may control, again, different ultrasonic signal transmitters included in the tactile feedback module 231 to send ultrasonic signals, to trigger corresponding tactile feedback. In this way, an effect of tactile enhancement and precise aggregation is achieved by tracking the center area of the finger of the user.

For example, after determining three-dimensional coordinates (x1, y1, z1) corresponding to the center area of the finger of the user, the touch control device indicates an ultrasonic signal transmitter farthest from the three-dimensional coordinates to send an ultrasonic signal S1, and indicates other ultrasonic signal transmitters at different distances to send ultrasonic signals S2, ..., and Sn by using the ultrasonic signal S1 as a reference, so that all ultrasonic signals simultaneously reach the three-dimensional coordinates (x1, y1, z1), to generate resonance at a location of the center area of the finger corresponding to the three-dimensional coordinates (x1, y1, z1), and implement a tracking tactile sensation.

Optionally, the tactile feedback may occur when the finger of the user touches or is about to touch the touch control cover. Alternatively, the tactile feedback may continuously occur in an entire process or a part of a process in which the finger of the user gradually approaches the cover. Optionally, the tactile feedback that continuously occurs may be continuously enhanced as the finger of the user approaches the cover.

Optionally, in a process in which the touch control device provides the tactile feedback for the user, the display device may also present cursors of different display styles, to provide display feedback for the user, implement a synchronous sensing effect of visual sensation and tactile sensation, and improve user experience.

In some embodiments, the display device may display a two-dimensional picture or a three-dimensional picture. In this case, in a touch control operation process, the display device may also present a corresponding two-dimensional or three-dimensional display effect based on a change of three-dimensional coordinates corresponding to a finger of a user.

For example, in a two-dimensional display scenario, the display device presents a drag and move effect on a currently displayed icon based on a change of three-dimensional coordinates corresponding to a finger of a user.

For another example, in a three-dimensional display scenario, the display device presents a pinching deformation effect on a currently displayed stereoscopic sponge based on a change of three-dimensional coordinates corresponding to a finger of a user. Alternatively, the display device presents a height change effect of a cursor in currently displayed three-dimensional space.

In some embodiments, the touch control device is configured with a plurality of use modes, and the touch control device may switch between different use modes in response to a user operation. Optionally, the use mode includes, for example, a touch control mode and a remote control mode.

For example, as shown in FIG. 24, in a process in which a touch control device is in a touch mode, the touch control device may detect three-dimensional coordinates corresponding to movement of a finger of a user in space above the touch control device, to perform a touch control operation on display content of a display device by using the touch control device. In some examples, in response to an operation of folding the touch control device inward along a folding shaft by the user in a direction shown by a reference numeral 241 and a reference numeral 242, when a folding angle φ1 is equal to 0 degrees (or less than a preset angle), the touch control device may switch the use mode to the remote control mode. In this way, the user may operate the display device by using a remote control button in a remote control button area located on the back of a detection area of the touch control device, to enrich use scenarios of the touch control device. Optionally, the remote control button may be a button form similar to that of a conventional remote control, or may be a simplified button. The remote control button provides a directional remote control function for the user in cooperation with a capability of a component like a positioning module. The function is different from a control capability and a control mode of the display device in the touch control mode. In some other examples, the user may directly switch the use mode of the touch control device through interface setting, so that the touch control device can switch between the touch control mode and the remote control mode without changing a form of the touch control device.

In some embodiments, the display device may be connected to at least one touch control device, and a plurality of touch control devices may meet a multi-user interaction requirement. For a touch control interaction implementation process between each of the plurality of touch control devices and the display device, refer to the foregoing touch control interaction implementation process between one touch control device and the display device. Optionally, a distinguishing role may be configured for the plurality of touch control devices, to trigger a distinguishing scenario function, and implement richer interaction scenarios. For example, in a game scenario, different touch control devices may correspondingly control different role display elements in a game interface.

In some solutions, a plurality of embodiments of this application may be combined, and a combined solution is implemented. Optionally, some operations in processes of the foregoing method embodiments are randomly combined, and/or a sequence of some operations is randomly changed. In addition, an execution sequence of steps of each procedure is merely an example, and does not constitute a limitation on an execution sequence of the steps. The steps may be alternatively performed in another execution sequence. It is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

For example, the plurality of touch control scenarios in the holding state or the non-holding state in the foregoing examples may be combined. For example, as shown in FIG. 14 or FIG. 15, in the non-holding state, the display device may display cursors with different display effects based on different heights of finger locations relative to the touch control device. When the user holds the touch control device, the display device may also display cursors with different display effects or display elements in different forms based on different heights of finger locations relative to the touch control device. For another example, the user may hold the touch control device with one hand. When a finger in a one-hand holding state performs a touch control operation, the other hand of the user is in a non-holding state, and may also perform a touch control operation. In this case, the touch control device may obtain three-dimensional coordinates in the holding state and three-dimensional coordinates in the non-holding state, and the display device may correspondingly display corresponding cursors. In this way, various use requirements of the user are met.

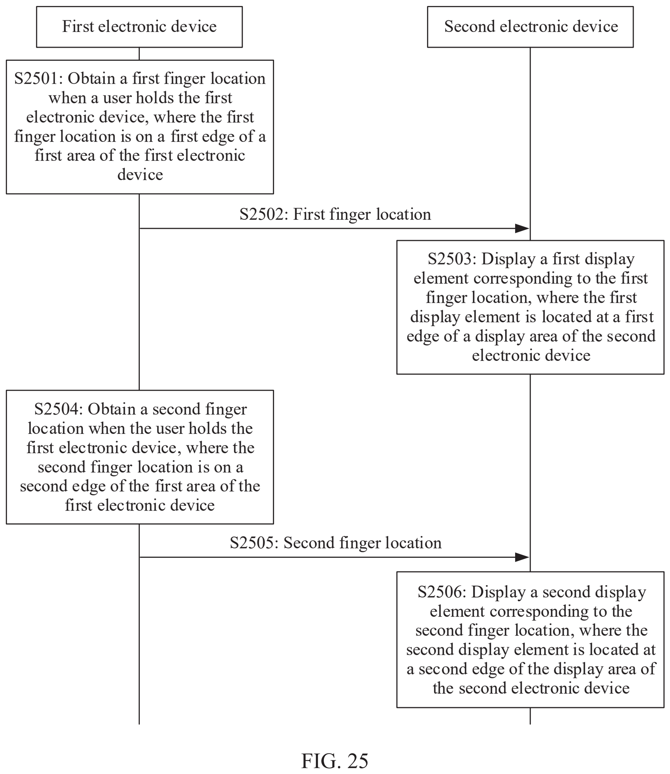

FIG. 25 is a schematic flowchart of a touch control method according to an embodiment of this application. It should be noted that the method is not limited to the specific sequence described in FIG. 25 and the following. It should be understood that in other embodiments, sequences of some steps in the method may be exchanged according to an actual requirement, or some steps in the method may be omitted or deleted. The method includes the following steps.

S2501: A first electronic device obtains a first finger location when a user holds the first electronic device, where the first finger location is on a first edge of a first area of the first electronic device.

A finger location of the user includes a location that is relative to the first electronic device and that is generated when the finger of the user performs a floating action or a touch action on the first electronic device.

S2502: The first electronic device sends the first finger location to a second electronic device.

S2503: The second electronic device displays a first display element corresponding to the first finger location, where the first display element is located at a first edge of a display area of the second electronic device.

The display element includes, for example, a cursor, a game watch, and a virtual character that are displayed on the second electronic device.

For example, as shown in (a) in FIG. 8, the display area of the display device is a rectangle, and the detection area of the touch control device is a cuboid (detection area including a rectangle). A long side of the display area corresponds to a long side of the touch control area, and a short side of the display area corresponds to a short side of the touch control area. When a user holds the touch control device with a right hand, a thumb of the right hand is located in a detection area of the touch control device, and may be used to control movement of a cursor displayed on the display device. Optionally, the detection area of the touch control device includes a right hand detectable area 81 (for example, the first area). The right hand detectable area 81 is a part of the detection area of the touch control device, and is used to detect a finger location of the user. In addition, when a finger of the user is at any location in the right hand detectable area 81, the corresponding cursor can be displayed at any location on the display. For example, as shown in (a) in FIG. 8, when the finger of the user is located on a right edge 811 (for example, the first edge of the first area) of the right hand detectable area 81, the display device may display, at a corresponding location on a right edge (for example, the first edge of the display area) of an entire display area, a cursor corresponding to the finger of the user.

S2504: The first electronic device obtains a second finger location when the user holds the first electronic device, where the second finger location is on a second edge of the first area of the first electronic device.

S2505: The first electronic device sends the second finger location to the second electronic device.

S2506: The second electronic device displays a second display element corresponding to the second finger location, where the second display element is located at a second edge of the display area of the second electronic device.

For example, as shown in (b) in FIG. 8, when the finger of the user is located on a left edge 812 (for example, the second edge of the first area) of the right hand detectable area 81, the display device may display, at a corresponding location on a left edge (for example, the second edge of the display area) of an entire display area, a cursor corresponding to the finger of the user.

In this way, the first electronic device is configured to map an operation to the first area of the entire display area of the first electronic device, to meet a one-hand operation range requirement of the user and reduce operation difficulty of the user. Therefore, a user operation is not affected because a finger of the user cannot touch a part of an area of the first electronic device in some cases.

In addition, with the cursor displayed and changed, the user does not need to switch a line of sight between the first electronic device and the second electronic device back and forth, but only needs to keep the line of sight on the second electronic device, to implement a touch control operation. Therefore, in a scenario that requires timely and coherent interaction feedback, like a game, the user may also control the second electronic device at a long distance by using the first electronic device. In this way, a requirement of a long-distance operation of the user is met while large-screen display experience of the user is met.

In some embodiments, the first electronic device obtains a third finger location and a fourth finger location of the user, where the third finger location is at a first height from the first electronic device, and the fourth finger location is at a second height from the first electronic device. Correspondingly, when the third finger location is at the first height from the first electronic device, the second electronic device displays a third display element having a first display effect. When the fourth finger location is at the second height from the first electronic device, the second electronic device displays a fourth display element having a second display effect, where the first display effect is different from the second display effect.

Optionally, the display effect includes, for example, a size, a color, and a shape of the display element. It should be understood that the third display element and the fourth display element may be same display elements with different display effects, for example, cursors with different colors.

For example, as shown in (a) to (c) in FIG. 15, as the finger of the user moves in the space above the first electronic device, the first electronic device sends corresponding three-dimensional coordinates to the second electronic device. The second electronic device displays the cursor at different display locations based on a change of the three-dimensional coordinates. In addition, as the height of the finger of the user from the cover of the first electronic device decreases, the color of the cursor is gradually deepened. When the finger of the user touches the cover, a cursor with a deepest color is displayed. As the height of the finger of the user from the cover of the first electronic device increases, the color of the cursor gradually decreases. When the height of the finger exceeds a detection distance of the first electronic device, that is, exceeds a detection area range, the first electronic device cannot detect the finger, and stops displaying the cursor.

In this way, the user perceives a relative location relationship between the finger in space and the first electronic device based on a change of a display effect of the display element, and adjusts the finger location in time, to improve interaction efficiency.

In some embodiments, the first electronic device obtains a fifth finger location in response to movement of the finger of the user from the first finger location to the fifth finger location. The first electronic device obtains a sixth finger location in response to movement of the finger of the user from the second finger location to the sixth finger location. A first projection distance that is between the first finger location and the fifth finger location and that is on the first electronic device is equal to a second projection distance that is between the second finger location and the sixth finger location and that is on the first electronic device. Correspondingly, the second electronic device displays, in response to detecting the fifth finger location by the first electronic device, a fifth display element corresponding to the fifth finger location. The second electronic device displays, in response to detecting the sixth finger location by the first electronic device, a sixth display element corresponding to the sixth finger location. A first distance between the first display element and the fifth display element is less than a second distance between the second display element and the sixth display element.

For example, in the scenario shown in FIG. 11, the first area in the detection area of the first electronic device is a right hand detectable area. In the right hand detectable area, a larger distance from a finger root location indicates a larger ratio coefficient used for converting three-dimensional coordinates; and a smaller distance from the finger root location indicates a smaller ratio coefficient used for converting three-dimensional coordinates. In this case, when a finger location near the finger root location and a finger location far away from the finger root location are respectively moved by a same distance, corresponding display element movement distances are different. For example, when a finger location near the finger root location is moved, a movement distance of a mapped display element is small, and when a finger location away from the finger root location is moved, a movement distance of a mapped display element is large.

In this way, it is ensured, by changing the ratio coefficient, that the finger of the user can obtain sensitive interaction experience at a near end or a far end. In this way, even if a size of the first electronic device is large for the user, a problem of an excessively large finger span of the user in a touch control process may be avoided, so that user experience is improved.

In some embodiments, the first electronic device obtains a seventh finger location of the user. The second electronic device displays, in response to detecting the seventh finger location by the first electronic device, a seventh display element corresponding to the seventh finger location, and changes a display effect of an eighth display element originally displayed at a display location of the seventh display element.

Optionally, a changed display effect of the eighth display element matches the seventh display element.

For example, as shown in FIG. 17(a), the first electronic device detects three-dimensional coordinates 1 corresponding to the finger of the user, and sends the three-dimensional coordinates 1 to the second electronic device. The second electronic device displays a cursor 171 based on the three-dimensional coordinates 1. Then, as the finger of the user moves, as shown in FIG. 17(b), the first electronic device detects three-dimensional coordinates 2 corresponding to the finger of the user, and sends the three-dimensional coordinates 2 to the second electronic device. The second electronic device displays a cursor 171 based on the three-dimensional coordinates 2. In addition, the second electronic device determines that a current display location of the cursor 171 overlaps a display area of an AI Life application icon. For example, the cursor 171 is displayed above the AI Life application icon. In this case, the second electronic device may expand display of an AI Life application icon, to prompt the user that the AI Life application icon can be operated at the current cursor location.

In this way, interaction experience of the user is improved by changing display of a plurality of display elements.

In some embodiments, the detection area of the first electronic device further includes a second area, the second area is a part of the detection area of the first electronic device, the second area is used to detect a finger location of the user, and the first finger location and the second finger location are right hand finger locations of the user. The first electronic device obtains an eighth finger location when the user holds the first electronic device, where the eighth finger location is on a first edge of the second area of the first electronic device. The first electronic device obtains a ninth finger location when the user holds the first electronic device, where the ninth finger location is on a second edge of the second area of the first electronic device. The first edge of the second area and the second edge of the second area are opposite edges of the second area, the opposite edges of the second area are perpendicular to the long side of the detection area, the eighth finger location and the ninth finger location are left hand finger locations of the user, and the first edge of the first area and the first edge of the second area are opposite edges of the detection area. Correspondingly, the second electronic device displays, in response to detecting the eighth finger location by the first electronic device, a ninth display element corresponding to the eighth finger location, where the ninth display element is located on the second edge of the display area of the second electronic device. The second electronic device displays, in response to detecting the ninth finger location by the first electronic device, a tenth display element corresponding to the ninth finger location, where the tenth display element is located on the first edge of the display area of the second electronic device.

For example, as shown in FIG. 10, the user holds the first electronic device with both hands, and the detection area of the first electronic device includes a right hand detectable area 81 (for example, the first area) and a left hand detectable area 91 (for example, the second area). Optionally, the right hand detectable area 81 and the left hand detectable area 91 may not overlap, and are combined into the detection area of the first electronic device, or the right hand detectable area 81 and the left hand detectable area 91 may partially overlap. When the finger of the right hand of the user is located on the right edge (for example, the first edge of the first area) of the right hand detectable area 81, the second electronic device displays the cursor on the right edge (for example, the first edge of the display area) of the display area. When the finger of the right hand of the user is located on the left edge (for example, the second edge of the first area) of the right hand detectable area 81, the second electronic device displays the cursor on the left edge (for example, the second edge of the display area) of the display area. When the finger of the left hand of the user is located on the left edge (for example, the first edge of the second area) of the left hand detectable area 91, the second electronic device displays the cursor on the left edge (for example, the second edge of the display area) of the display area. When the finger of the left hand of the user is located on the right edge (for example, the second edge of the second area) of the left hand detectable area 91, the second electronic device displays the cursor on the right edge (for example, the first edge of the display area) of the display area.

In this way, the right hand detectable area and/or the left hand detectable area are/is configured, and both the right hand detectable area and the left hand detectable area can be mapped to the entire display area of the display device, to meet an operation requirement of holding with two hands of the user, and reduce one-hand operation difficulty of the user in this process. Therefore, a user operation is not affected because the finger of the user cannot touch a partial area.

In some embodiments, the first electronic device obtains a tenth finger location of the user. The first electronic device sends a plurality of first signals to the tenth finger location by using a signal transmission array, where time at which the plurality of first signals arrive at the tenth finger location is the same or similar.

Optionally, the first signal is ultrasonic, high-frequency light, or the like.

In this way, the first electronic device may provide tactile feedback for the user, to enrich user experience.

In some examples, the first electronic device obtains an eleventh finger location of the user. The tenth finger location is at a third height from the first electronic device, and the eleventh finger location is at a fourth height from the first electronic device. The first electronic device sends a plurality of second signals to the eleventh finger location by using the signal transmission array, where time at which the plurality of second signals arrive at the eleventh finger location is the same or similar, and signal strength of the plurality of first signals is different from signal strength of the plurality of second signals.

In this way, a change of a distance is prompted to the user when the tactile feedback continuously increases as the finger of the user gets closer to the cover.

In some embodiments, the first electronic device obtains a twelfth finger location of the user, where the twelfth finger location is at a fifth height from the first electronic device. The second electronic device displays, in response to detecting the twelfth finger location by the first electronic device, an eleventh display element corresponding to the twelfth finger location, where the eleventh display element is displayed above the twelfth display element displayed on the second electronic device. When the fifth height is 0, execution of a response event corresponding to the twelfth display element is triggered.

For example, as shown in FIG. 17(b), as the AI Life application icon becomes larger, the user determines that the current cursor 171 can operate the AI Life application icon. In this case, the user may decrease the height of the finger, to trigger an operation on the AI Life application icon. As shown in FIG. 17(c), the first electronic device detects three-dimensional coordinates 3 corresponding to the finger of the user, and sends the three-dimensional coordinates 3 to the second electronic device. The second electronic device determines, based on the three-dimensional coordinates 3, that z indicated in the three-dimensional coordinates 3 is equal to 0, and may display a cursor 171 corresponding to a touch state. In addition, the second electronic device may determine that the user indicates to tap the AI Life application icon. In this case, the second electronic device may start an AI Life application, and display an AI Life application interface shown in FIG. 17(d).

In this way, as the finger of the user moves in space, the second electronic device may execute a change of a corresponding display element, to prompt the user of a task that a current finger may indicate the second electronic device to execute. In addition, in response to a change of a finger height of the user, the second electronic device triggers a corresponding response event, to meet an interaction requirement of the user.

Optionally, the first electronic device may further perform steps and functions performed by the touch control device in the foregoing embodiments, and the second electronic device may further perform steps and functions performed by the display device in the foregoing embodiments, to implement the touch control method provided in the foregoing embodiments.

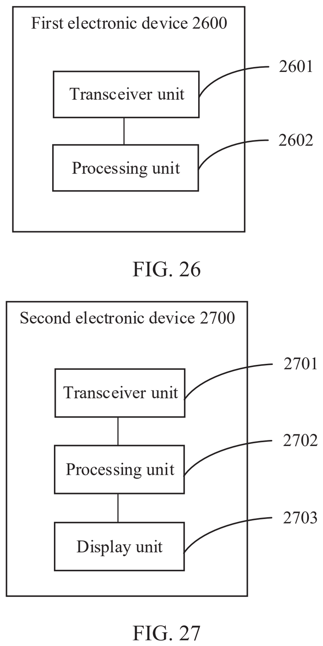

The touch control methods provided in embodiments of this application are described above in detail with reference to FIG. 5 to FIG. 20. The following describes in detail the first electronic device provided in this embodiment of this application with reference to FIG. 26, and describes in detail the second electronic device provided in this embodiment of this application with reference to FIG. 27.

In a possible design, FIG. 26 is a diagram of a structure of a first electronic device according to an embodiment of this application. As shown in FIG. 26, the first electronic device 2600 may include a transceiver unit 2601 and a processing unit 2602. The first electronic device 2600 may be configured to implement functions of the first electronic device (for example, the touch control device) in the foregoing method embodiments.

Optionally, the transceiver unit 2601 is configured to support the first electronic device 2600 in performing S2502 and S2505 in FIG. 25.

Optionally, the processing unit 2602 is configured to support the first electronic device 2600 in performing S2501 and S2504 in FIG. 25.

The transceiver unit may include a receiving unit and a sending unit, may be implemented by a transceiver or a transceiver-related circuit component, and may be a transceiver or a transceiver module. Operations and/or functions of the units in the first electronic device 2600 are separately used to implement corresponding procedures of the touch control method in the foregoing method embodiments. All related content of the steps in the foregoing method embodiments may be cited in function descriptions of corresponding functional units. For brevity, details are not described herein again.

Optionally, the first electronic device 2600 shown in FIG. 26 may further include a storage unit (not shown in FIG. 26), and the storage unit stores a program or instructions. When the transceiver unit 2601 and the processing unit 2602 execute the program or the instructions, the first electronic device 2600 shown in FIG. 26 is enabled to perform the touch control method in the foregoing method embodiments.

For a technical effect of the first electronic device 2600 shown in FIG. 26, refer to the technical effect of the touch control method shown in the foregoing method embodiments. Details are not described herein again.

In addition to a form of the first electronic device 2600, the technical solutions provided in this application may also be a functional unit or a chip in the first electronic device, or an apparatus used together with the first electronic device.

In a possible design, FIG. 27 is a diagram of a structure of a second electronic device according to an embodiment of this application. As shown in FIG. 27, the second electronic device 2700 may include a transceiver unit 2701, a processing unit 2702, and a display unit 2703. The second electronic device 2700 may be configured to implement functions of the second electronic device (for example, the display device) in the foregoing method embodiments.

Optionally, the transceiver unit 2701 is configured to support the second electronic device 2700 in performing S2502 and S2505 in FIG. 25.

Optionally, the processing unit 2702 is configured to support the second electronic device 2700 in performing S2503 and S2506 in FIG. 25.

Optionally, the display unit 2703 is configured to support the second electronic device 2700 in performing S2503 and S2506 in FIG. 25.

The transceiver unit may include a receiving unit and a sending unit, may be implemented by a transceiver or a transceiver-related circuit component, and may be a transceiver or a transceiver module. Operations and/or functions of the units in the second electronic device 2700 are separately used to implement corresponding procedures of the touch control method in the foregoing method embodiments. All related content of the steps in the foregoing method embodiments may be cited in function descriptions of corresponding functional units. For brevity, details are not described herein again.

Optionally, the second electronic device 2700 shown in FIG. 27 may further include a storage unit (not shown in FIG. 27), and the storage unit stores a program or instructions. When the transceiver unit 2701, the processing unit 2702, and the display unit 2703 execute the program or the instructions, the second electronic device 2700 shown in FIG. 27 is enabled to perform the touch control method in the foregoing method embodiments.

For a technical effect of the second electronic device 2700 shown in FIG. 27, refer to the technical effect of the touch control method shown in the foregoing method embodiments. Details are not described herein again.

In addition to a form of the second electronic device 2700, the technical solutions provided in this application may also be a functional unit or a chip in the second electronic device, or an apparatus used together with the second electronic device.

An embodiment of this application further provides a chip system, including a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by using an integrated logic circuit of hardware in the processor or an instruction in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the touch control method in the foregoing embodiments.

An embodiment of this application further provides a computer program product. When the computer program product is run on a computer, the computer is enabled to perform the foregoing related steps, to implement the touch control method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the touch control method in the foregoing method embodiments.

The apparatus, the computer-readable storage medium, the computer program product, or the chip provided in embodiments of this application are all configured to perform the corresponding method provided above. Therefore, for beneficial effect that can be achieved, refer to beneficial effect in the corresponding method provided above, and details are not described herein again.

Methods or algorithm steps described in combination with the content disclosed in this embodiment of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a specific working process of the foregoing system, apparatus, and unit, refer to a corresponding process in the foregoing method embodiments, and details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A touch control system, wherein the system comprises a first electronic device and a second electronic device, wherein
the first electronic device is configured to:
obtain a first finger location when a user holds the first electronic device, wherein the first finger location is on a first edge of a first area of the first electronic device, the first area is a part of a detection area of the first electronic device, and the first area is used to detect a finger location of the user; and
obtain a second finger location when the user holds the first electronic device, wherein the second finger location is on a second edge of the first area of the first electronic device, the first edge of the first area and the second edge of the first area are opposite edges of the first area, and the opposite edges of the first area are perpendicular to a long side of the detection area; and
the second electronic device is configured to:
display, in response to detecting the first finger location by the first electronic device, a first display element corresponding to the first finger location, wherein the first display element is located on a first edge of a display area of the second electronic device; and
display, in response to detecting the second finger location by the first electronic device, a second display element corresponding to the second finger location, wherein the second display element is located on a second edge of the display area of the second electronic device, and the first edge of the display area and the second edge of the display area are opposite edges of the display area.

2. The system according to claim 1, wherein
the first electronic device is configured to:
obtain a third finger location and a fourth finger location of the user, wherein the third finger location is at a first height from the first electronic device, and the fourth finger location is at a second height from the first electronic device; and
the second electronic device is configured to:
when the third finger location is at the first height from the first electronic device, display a third display element having a first display effect, and
when the fourth finger location is at the second height from the first electronic device, display a fourth display element having a second display effect, wherein the first display effect is different from the second display effect.

3. The system according to claim 1 or 2, wherein
the first electronic device is configured to:
obtain a fifth finger location in response to movement of a finger of the user from the first finger location to the fifth finger location; and
obtain a sixth finger location in response to movement of the finger of the user from the second finger location to the sixth finger location, wherein a first projection distance that is between the first finger location and the fifth finger location and that is on the first electronic device is equal to a second projection distance that is between the second finger location and the sixth finger location and that is on the first electronic device; and
the second electronic device is configured to:
display, in response to detecting the fifth finger location by the first electronic device, a fifth display element corresponding to the fifth finger location; and
display, in response to detecting the sixth finger location by the first electronic device, a sixth display element corresponding to the sixth finger location, wherein a first distance between the first display element and the fifth display element is less than a second distance between the second display element and the sixth display element.

4. The system according to any one of claims 1 to 3, wherein
the first electronic device is configured to:
obtain a seventh finger location of the user; and
the second electronic device is configured to:
display, in response to detecting the seventh finger location by the first electronic device, a seventh display element corresponding to the seventh finger location, and change a display effect of an eighth display element originally displayed at a display location of the seventh display element.

5. The system according to claim 4, wherein a changed display effect of the eighth display element matches the seventh display element.

6. The system according to any one of claims 1 to 5, wherein the detection area of the first electronic device further comprises a second area, the second area is a part of the detection area of the first electronic device, the second area is used to detect a finger location of the user, and the first finger location and the second finger location are right hand finger locations of the user, wherein
the first electronic device is configured to:
obtain an eighth finger location when the user holds the first electronic device, wherein the eighth finger location is on a first edge of the second area of the first electronic device; and
obtain a ninth finger location when the user holds the first electronic device, wherein the ninth finger location is on a second edge of the second area of the first electronic device, the first edge of the second area and the second edge of the second area are opposite edges of the second area, the opposite edges of the second area are perpendicular to the long side of the detection area, the eighth finger location and the ninth finger location are left hand finger locations of the user, and the first edge of the first area and the first edge of the second area are opposite edges of the detection area; and
the second electronic device is configured to:
display, in response to detecting the eighth finger location by the first electronic device, a ninth display element corresponding to the eighth finger location, wherein the ninth display element is located on the second edge of the display area of the second electronic device; and
display, in response to detecting the ninth finger location by the first electronic device, a tenth display element corresponding to the ninth finger location, wherein the tenth display element is located on the first edge of the display area of the second electronic device.

7. The system according to any one of claims 1 to 6, wherein
the first electronic device is configured to:
obtain a tenth finger location of the user; and
send a plurality of first signals to the tenth finger location by using a signal transmission array, wherein time at which the plurality of first signals arrive at the tenth finger location is the same or similar.

8. The system according to claim 7, wherein
the first electronic device is configured to:
obtain an eleventh finger location of the user, wherein the tenth finger location is at a third height from the first electronic device, and the eleventh finger location is at a fourth height from the first electronic device; and
send a plurality of second signals to the eleventh finger location by using the signal transmission array, wherein time at which the plurality of second signals arrive at the eleventh finger location is the same or similar, and signal strength of the plurality of first signals is different from signal strength of the plurality of second signals.

9. The system according to any one of claims 1 to 8, wherein
the first electronic device is configured to:
obtain a twelfth finger location of the user, wherein the twelfth finger location is at a fifth height from the first electronic device; and
the second electronic device is configured to:
display, in response to detecting the twelfth finger location by the first electronic device, an eleventh display element corresponding to the twelfth finger location, wherein the eleventh display element is displayed above the twelfth display element displayed on the second electronic device; and
when the fifth height is 0, trigger execution of a response event corresponding to the twelfth display element.

10. The system according to any one of claims 1 to 9, wherein the finger location of the user comprises a location that is relative to the first electronic device and that is generated when the finger of the user performs a floating action or a touch action on the first electronic device.

11. A touch control method, applied to a first electronic device, wherein the method comprises:
obtaining a first finger location when a user holds the first electronic device, wherein the first finger location is on a first edge of a first area of the first electronic device, the first area is a part of a detection area of the first electronic device, and the first area is used to detect a finger location of the user; and
obtaining a second finger location when the user holds the first electronic device, wherein the second finger location is on a second edge of the first area of the first electronic device, the first edge of the first area and the second edge of the first area are opposite edges of the first area, and the opposite edges of the first area are perpendicular to a long side of the detection area, wherein
the first finger location corresponds to a first display element displayed on a second electronic device, and the first display element is located on a first edge of a display area of the second electronic device; and
the second finger location corresponds to a second display element displayed on the second electronic device, the second display element is located on a second edge of the display area of the second electronic device, and the first edge of the display area and the second edge of the display area are opposite edges of the display area.

12. The method according to claim 11, wherein the method further comprises:
obtaining a third finger location and a fourth finger location of the user, wherein the third finger location is at a first height from the first electronic device, and the fourth finger location is at a second height from the first electronic device, wherein
the third finger location corresponds to a third display element that has a first display effect and that is displayed on the second electronic device, the fourth finger location corresponds to a fourth display element that has a second display effect and that is displayed on the second electronic device, and the first display effect is different from the second display effect.

13. The method according to claim 11 or 12, wherein the method further comprises:
obtaining a fifth finger location in response to movement of a finger of the user from the first finger location to the fifth finger location; and
obtaining a sixth finger location in response to movement of the finger of the user from the second finger location to the sixth finger location, wherein a first projection distance that is between the first finger location and the fifth finger location and that is on the first electronic device is equal to a second projection distance that is between the second finger location and the sixth finger location and that is on the first electronic device, wherein
the fifth finger location corresponds to a fifth display element displayed on the second electronic device, the sixth finger location corresponds to a sixth display element displayed on the second electronic device, and a first distance between the first display element and the fifth display element is less than a second distance between the second display element and the sixth display element.

14. The method according to any one of claims 11 to 13, wherein the method further comprises:
obtaining a seventh finger location of the user, wherein
the seventh finger location corresponds to a seventh display element displayed on the second electronic device, and before and after the seventh display element is displayed at a display location corresponding to the seventh finger location, a display effect of an eighth display element originally displayed at the display location changes.

15. The method according to claim 14, wherein a changed display effect of the eighth display element matches the seventh display element.

16. The method according to any one of claims 11 to 15, wherein the detection area of the first electronic device further comprises a second area, the second area is a part of the detection area of the first electronic device, the second area is used to detect a finger location of the user, and the first finger location and the second finger location are right hand finger locations of the user; and the method further comprises:
obtaining an eighth finger location when the user holds the first electronic device, wherein the eighth finger location is on a first edge of the second area of the first electronic device; and
obtaining a ninth finger location when the user holds the first electronic device, wherein the ninth finger location is on a second edge of the second area of the first electronic device, the first edge of the second area and the second edge of the second area are opposite edges of the second area, the opposite edges of the second area are perpendicular to the long side of the detection area, the eighth finger location and the ninth finger location are left hand finger locations of the user, and the first edge of the first area and the first edge of the second area are opposite edges of the detection area, wherein
the eighth finger location corresponds to a ninth display element displayed on the second electronic device, and the ninth display element is located on the second edge of the display area of the second electronic device; and
the ninth finger location corresponds to a tenth display element displayed on the second electronic device, and the tenth display element is located at the first edge of the display area of the second electronic device.

17. The method according to any one of claims 11 to 16, wherein the method further comprises:
obtaining a tenth finger location of the user; and
sending a plurality of first signals to the tenth finger location by using a signal transmission array, wherein time at which the plurality of first signals arrive at the tenth finger location is the same or similar.

18. The method according to claim 17, wherein the method further comprises:
obtaining an eleventh finger location of the user, wherein the tenth finger location is at a third height from the first electronic device, and the eleventh finger location is at a fourth height from the first electronic device; and
sending a plurality of second signals to the eleventh finger location by using the signal transmission array, wherein time at which the plurality of second signals arrive at the eleventh finger location is the same or similar, and signal strength of the plurality of first signals is different from signal strength of the plurality of second signals.

19. The method according to any one of claims 11 to 18, wherein the method further comprises:
obtaining a twelfth finger location of the user, wherein the twelfth finger location is at a fifth height from the first electronic device, wherein
the twelfth finger location corresponds to an eleventh display element displayed on the second electronic device, the eleventh display element is displayed above the twelfth display element displayed on the second electronic device, and that the fifth height is 0 indicates that the second electronic device is triggered to execute a response event corresponding to the twelfth display element.

20. The method according to any one of claims 11 to 19, wherein the finger location of the user comprises a location that is relative to the first electronic device and that is generated when the finger of the user performs a floating action or a touch action on the first electronic device.

21. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 11 to 20.

22. A computer-readable storage medium, wherein the computer-readable storage medium comprises a computer program, and when the computer program is run on an electronic device, the electronic device is enabled to perform the method according to any one of claims 11 to 20.

23. A computer program product, wherein when the computer program product is run on a computer, the computer is enabled to perform the method according to any one of claims 11 to 20.
